# EUROPEAN PATENT SPECIFICATION

(11) **EP 3 018 962 B1**
(45) Date of publication and mention of the grant of the patent: **26.01.2022**
(21) Application number: 13891420.5
(22) Date of filing: 14.08.2013
(51) Int. Cl.: H04W 74/08, H04W 4/70

(54) **METHOD FOR RANDOMLY ACCESSING A NETWORK, AND TERMINAL**
VERFAHREN FÜR EIN DIREKTZUGRIFFSNETZWERK, UND ENDGERÄT
PROCÉDÉ D'ACCÈS ALÉATOIRE À UN RÉSEAU, ET TERMINAL

(43) Date of publication of application: 11.05.2016
(73) Proprietor: Huawei Technologies Co., Ltd., Longgang District Shenzhen, Guangdong 518129 (CN)
(72) Inventor: ZHANG, Xiangdong, Shenzhen City Guangdong 518129 (CN); YU, Zheng, Shenzhen City Guangdong 518129 (CN); NAN, Fang, Shenzhen City Guangdong 518129 (CN)
(74) Representative: Körber, Martin Hans
(86) International application number: PCT/CN2013/081471
(87) International publication number: WO 2015/021618

(56) References cited:
- CN-A- 101 087 469
- CN-A- 101 098 297
- CN-A- 102 209 391
- CN-A- 103 037 530
- ALCATEL-LUCENT ET AL: "Coverage enhancement for PRACH", 3GPP DRAFT; R1-132971 - REL-12 MTC - COVERAGE ENHANCEMENT FOR PRACH V0.2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Barcelona, Spain; 20130819 - 20130823 10 August 2013 (2013-08-10), XP050716207, Retrieved from the Internet: URL:http://www.3gpp.org/ftp/tsg_ran/WG1_RL 1/TSGR1_74/Docs/ [retrieved on 2013-08-10]
- INTEL CORPORATION: "Discussion on PRACH Coverage Enhancement for Low Cost MTC", 3GPP DRAFT; R1-132930 - DISCUSSION ON PRACH COVERAGE ENHANCEMENT FOR LOW COST MTC, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. RAN WG1, no. Barcelona, Spain; 20130819 - 20130823 10 August 2013 (2013-08-10), XP050716170, Retrieved from the Internet: URL:http://www.3gpp.org/ftp/tsg_ran/WG1_RL 1/TSGR1_74/Docs/ [retrieved on 2013-08-10]
- ZTE: "Physical Random Access Channel Coverage Enhancement", 3GPP DRAFT; R1-133063, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Barcelona, Spain; 20130819 - 20130823 10 August 2013 (2013-08-10), XP050716290, Retrieved from the Internet: URL:http://www.3gpp.org/ftp/tsg_ran/WG1_RL 1/TSGR1_74/Docs/ [retrieved on 2013-08-10]
- NEW POSTCOM: "UL Coverage Improvement and Evaluation for Low Cost MTC", 3GPP DRAFT; R1-131120 UL COVERAGE IMPROVEMENT AND EVALUATION FOR LOW COST MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. Chicago, USA; 20130415 - 20130419 6 April 2013 (2013-04-06), XP050697060, Retrieved from the Internet: URL:http://www.3gpp.org/ftp/tsg_ran/WG1_RL 1/TSGR1_72b/Docs/ [retrieved on 2013-04-06]

## Description

### TECHNICAL FIELD

The present invention relates to the field of the Internet of Things, and in particular, to a method for randomly accessing a network, and a terminal.

### BACKGROUND

In a network of the Internet of Things, one base station serves multiple MTC (machine type communication, machine type communication) terminals at the same time. For an MTC terminal in a particular environment, such as an electricity meter or a water meter that is placed in a basement, a coverage enhancement technology needs to be used, so that the MTC device can complete communication with a system. Before an MTC terminal communicates with a base station, the MTC terminal needs to access a network by means of a random access process.

In the prior art, for a device that requires coverage enhancement, a method for randomly accessing a network is provided and may be as follows: A base station groups random access resources according to coverage enhancement levels, for example, allocates the random access resources evenly to each coverage enhancement level; and sends a notification message to all MTC terminals for which the base station provides a service, where the notification message carries a correspondence between a coverage enhancement level and a random access resource group. An MTC terminal receives the notification message sent by the base station, and determines a coverage enhancement level according to its own path loss; acquires, from the correspondence between a coverage enhancement level and a random access resource group, a random access resource group and a corresponding random access resource according to the determined coverage enhancement level; and initiates, by using the acquired random access resource, a random access process to access a network.

In a process of implementing the present invention, the prior art has at least the following disadvantages:

When a base station has not obtained information about an MTC terminal served by the base station, or after a period of time since the base station obtained information about an MTC terminal served by the base station and grouped random access resources according to coverage enhancement levels, the base station may be not capable or no longer capable of providing a good access service for the MTC terminal by using the random access resources grouped according to the coverage enhancement levels. For example, within a period of time, if there are too many MTC terminals at a coverage enhancement level, random access resources that are included in a random access resource group corresponding to the coverage enhancement level are relatively insufficient, resulting in a higher probability that a conflict occurs in randomly accessing a network; while there are fewer MTC terminals at another coverage enhancement level, and random access resources that are included in a random access resource group corresponding to the coverage enhancement level are relatively sufficient, resulting in low random access resource utilization.

ALCATEL-LUCENT ET AL, "Coverage enhancement for PRACH", vol. RAN WG1, no. Barcelona, Spain; 20130819 - 20130823, (20130810), 3GPP DRAFT; R1-132971 - REL-12 MTC - COVERAGE ENHANCEMENT FOR PRACH V0.2, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX, URL: http://www.3gpp.org/ftp/tsg_ran/WG1_RL1/TSGR1_74/Docs/, (20130810), XP050716207, discloses a method that for randomly accessing a network, wherein a MTC UE selects a level of coverage enhancement and attempts the RACH procedure with the corresponding resources and if no response is received, the MTC UE attempts the random access process with a preamble resource corresponding to a higher repetition level.

INTEL CORPORATION: "Discussion on PRACH Coverage Enhancement for Low Cost MTC", 3GPP DRAFT; R1-132930-DISCUSSION ON PRACH COVERAGE ENHANCEMENT FOR LOW COST MTC, 3RD GENERATION PARTNERSHIP PROJECT (3GPP), MOBILE COMPETENCE CENTRE; 650, ROUTE DES LUCIOLES; F-06921 SOPHIA-ANTIPO, vol. RAN WG1, no. Barcelona, Spain; 20130819-20130823 10 August 2013(2013-08-10), XP050716170, Retrieved from the Internet: URL http://www.3gpp.org/ftp/tsg_ran/WG1_RL1/TSGR1_74/Docs/ [retrieved on 2013-08-10], discloses a method that for randomly accessing a network, wherein when UEs fail to receive Random Access Response (RAR) from eNB after certain number of retransmission attempts, they may increase the repetition level for the subsequent retransmission attempts to improve the detection performance.

### SUMMARY

To resolve the problem in the prior art, the present invention provides a method for randomly accessing a network, a terminal, and a computer readable storage medium as described in the appended claims. The technical solutions are as follows:

According to a first aspect, the present invention provides a method for randomly accessing a network, where the method includes:
determining, by a machine type communication, MTC terminal that requires coverage enhancement, a coverage enhancement level of the MTC terminal;
acquiring, by the MTC terminal, according to the coverage enhancement level of the MTC terminal, random access resources corresponding to the coverage enhancement level of the MTC terminal; and
initiating by the MTC terminal, a random access process by the MTC terminal , by using the random access resources corresponding to the coverage enhancement level of the MTC terminal, as the random access resources corresponding to the MTC terminal
acquiring, by the MTC terminal, another coverage enhancement level different from the coverage enhancement level of the MTC terminal when the MTC terminal fails to access a network after initiating the random access process for a predefined quantity of times; acquiring, by the MTC terminal, predefined random access resources according to the another coverage enhancement level different from the coverage enhancement level of the MTC terminal, wherein the predefined random access resources include a time-frequency resource and a preamble resource; and
initiating, by the MTC terminal, a random access process by using the acquired predefined random access resources, comprising:
   acquiring, by the MTC terminal according to the another coverage enhancement level different from the coverage enhancement level of the MTC terminal, power at which the MTC terminal sends a preamble; and
   sending the acquired preamble to a base station over the acquired time-frequency resource at the acquired power for sending the preamble.

According to a second aspect, the present invention provides a terminal, where the terminal includes:
a first determining module , configured to determine a coverage enhancement level of a MTC terminal that requires coverage enhancement;
an acquiring module, configured to acquire according to the coverage enhancement level of the MTC terminal, random access resources corresponding to the coverage enhancement level of the MTC terminal; and
an access module, configured to initiate a random access process by the MTC terminal by using the random access resources corresponding to the coverage enhancement level of the MTC terminal, as the random access resources corresponding to the MTC terminal
the acquiring module, configured to acquire another coverage enhancement level different from the coverage enhancement level of the MTC terminal when the MTC terminal fails to access a network after initiating the random access process for a predefined quantity of times;
acquire predefined random access resources according to the another coverage enhancement level different from the coverage enhancement level of the MTC terminal , wherein the predefined random access resources include a time-frequency resource and a preamble resource; and
the access module, configured to initiate a random access process by using the acquired predefined random access resources, comprising:
   acquire, according to the anther coverage enhancement level different from the coverage enhancement level of the MTC terminal, power at which the MTC terminal sends a preamble; and
   send the acquired preamble to a base station over the acquired time-frequency resource at the acquired power for sending the preamble.

According to a third aspect, the present invention provides a computer readable storage medium storing program, when excuted by a computer, causes the computer to carry out the method according to the first aspect.

In some aspects, an MTC terminal acquires predefined random access resources when random access resources corresponding to the MTC terminal are insufficient, where the predefined random access resources are random access resources corresponding to the MTC terminal, or the predefined random access resources are random access resources except random access resources corresponding to the MTC terminal; and the MTC terminal initiates a random access process by using the acquired predefined random access resources. Therefore, a probability that a conflict occurs in randomly accessing a network is reduced, and random access resource utilization is improved. Further, the MTC terminal notifies a base station that random access resources corresponding to a coverage enhancement level of the MTC terminal are insufficient, and the base station increases the random access resources corresponding to the coverage enhancement level of the MTC terminal, so as to provide a better service for the MTC terminal.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for randomly accessing a network according to Example 1;
FIG. 2 is a flowchart of a method for randomly accessing a network according to Example 1;
FIG. 3 is a flowchart of a method for randomly accessing a network according to Example 2;
FIG. 4 is a flowchart of a method for randomly accessing a network according to Example 3;
FIG. 5 is a flowchart of a method for randomly accessing a network according to Example 4;
FIG. 6 is a flowchart of a method for randomly accessing a network according to Example 5;
FIG. 7 is a schematic diagram of a structure of a terminal according to Example 6;
FIG. 8 is another schematic diagram of a structure of a terminal according to Example 6;
FIG. 9 is a schematic diagram of a structure of a base station according to Example 7;
FIG. 10 is another schematic diagram of a structure of a base station according to Example 7;
FIG. 11 is a schematic diagram of a structure of a terminal according to Example 8; and
FIG. 12 is a schematic diagram of a structure of a base station according to Example 9.

### DESCRIPTION OF EMBODIMENTS

To make the objectives, technical solutions, and advantages of the present invention clearer, the following further describes a number of examples in detail with reference to the accompanying drawings. Example 1

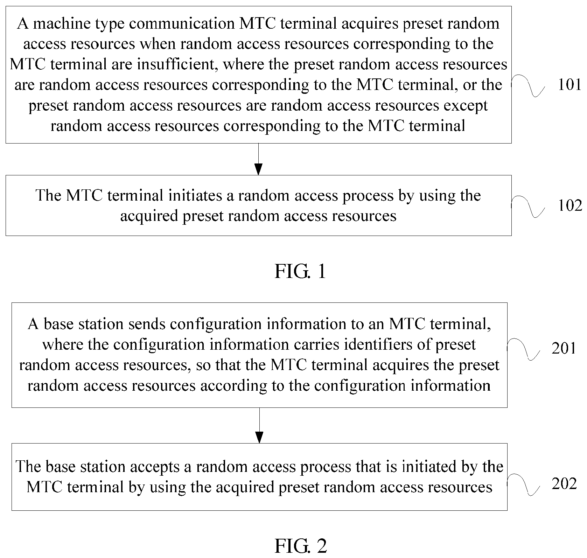

The present disclosure provides a method for randomly accessing a network. Referring to FIG. 1, the method includes the following steps:
101. A machine type communication MTC terminal acquires predefined random access resources when random access resources corresponding to the MTC terminal are insufficient, where the predefined random access resources are random access resources corresponding to the MTC terminal, or the predefined random access resources are random access resources except random access resources corresponding to the MTC terminal.
102. The MTC terminal initiates a random access process by using the acquired predefined random access resources.
Further, the present invention provides a method for randomly accessing a network. Referring to FIG. 2, the method includes the following steps:
201. A base station sends configuration information to an MTC terminal, where the configuration information carries identifiers of predefined random access resources, so that the MTC terminal acquires the predefined random access resources according to the configuration information.
202. The base station accepts a random access process that is initiated by the MTC terminal by using the acquired predefined random access resources.

In this example, an MTC terminal acquires predefined random access resources when random access resources corresponding to the MTC terminal are insufficient, where the predefined random access resources are random access resources corresponding to the MTC terminal, or the predefined random access resources are random access resources except random access resources corresponding to the MTC terminal; and the MTC terminal initiates a random access process by using the acquired predefined random access resources. Therefore, a probability that a conflict occurs in randomly accessing a network is reduced, and random access resource utilization is improved.

### Example 2

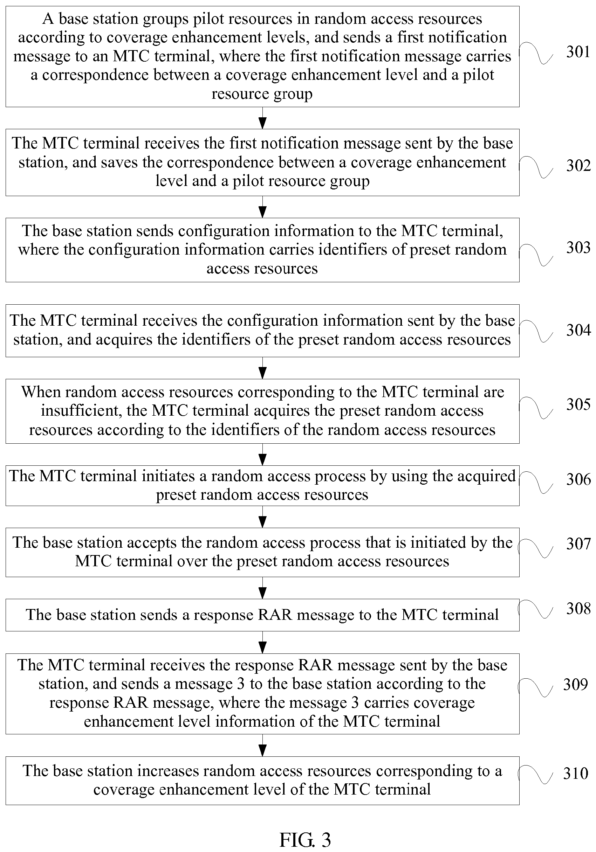

This example provides a method for randomly accessing a network. Grouping preamble resources in random access resources is used as an example for description in this embodiment of the present invention. Referring to FIG. 3, the method includes the following steps:
301. A base station groups preamble resources in random access resources according to coverage enhancement levels, and sends a first notification message to an MTC terminal, where the first notification message carries a correspondence between a coverage enhancement level and a preamble resource group.

The random access resources include a time-frequency resource and a preamble resource. The coverage enhancement level refers to a level of degree to which coverage needs to be enhanced when the MTC terminal communicates with the base station, and different coverage enhancement levels are corresponding to different coverage enhancement technologies or different combinations of coverage enhancement technologies. The MTC terminal is any MTC terminal for which the base station provides a service.

The base station allocates preambles that are included in the preamble resources in the random access resources to each coverage enhancement level according to the coverage enhancement levels, for example, allocates, in an even manner, the preamble resources evenly to each coverage enhancement level, and sends the first notification message to all MTC terminals for which the base station provides a service, where the first notification message carries the correspondence between a coverage enhancement level and a preamble resource group.

The MTC terminal may acquire, according to a coverage enhancement level of the MTC terminal, a preamble resource group in random access resources corresponding to the coverage enhancement level of the MTC terminal, and acquire a preamble from the preamble resource group.

For example, preamble resources in random access resources of a base station include 64 preambles, which are a Preamble 0, a Preamble 1, ..., and a Preamble 63, respectively; there are eight coverage enhancement levels in the base station in total, which are a coverage enhancement level 0, a coverage enhancement level 1, ..., and a coverage enhancement level 7, respectively. Therefore, the base station allocates the 64 Preambles evenly to the eight coverage enhancement levels according to the coverage enhancement levels, and random access resources of each coverage enhancement level are corresponding to eight Preambles. That is, a Preamble group 0 corresponding to the coverage enhancement level 0 includes the Preamble 0, the Preamble 1, ..., and a Preamble 7; a Preamble group 1 corresponding to the coverage enhancement level 1 includes a Preamble 8, a Preamble 9, ..., and a Preamble 15; ...; a Preamble group 7 corresponding to the coverage enhancement level 7 includes a Preamble 56, a Preamble 57, ..., and the Preamble 63.

302. The MTC terminal receives the first notification message sent by the base station, and saves the correspondence between a coverage enhancement level and a preamble resource group.

The MTC terminal saves the correspondence between a coverage enhancement level and a preamble resource group. When randomly accessing a network, the MTC terminal determines a preamble resource group according to a coverage enhancement level, selects one preamble from the preamble resource group, and randomly accesses the network by using the selected preamble.

303. The base station sends configuration information to the MTC terminal, where the configuration information carries identifiers of predefined random access resources.

The configuration information may further carry a correspondence between an identifier of a predefined random access resource and a predefined period. When random access resources corresponding to the MTC terminal are insufficient, the MTC terminal may acquire a predefined period according to the configuration information, and acquire a predefined random access resource according to the predefined period.

The predefined random access resources are used so that the MTC terminal initiates, by using the predefined random access resources, a random access process when the random access resources corresponding to the coverage enhancement level of the MTC terminal are insufficient.

The predefined random access resources are further used to notify the base station that the random access resources corresponding to the coverage enhancement level of the MTC terminal are insufficient.

In this example, the predefined random access resources are time-frequency resources TF-resources in predefined time-frequency resources; or the predefined random access resources are a predefined preamble that is included in preamble resources in the random access resources corresponding to the coverage enhancement level of the MTC terminal, and a predefined time-frequency resource TF-resource that is included in time-frequency resources in the random access resources corresponding to the coverage enhancement level of the MTC terminal.

The predefined random access resources appear periodically, or the predefined random access resources are configured by a system. For example, it is configured on the base station that a predefined TF-resource appears once every 5s.

304. The MTC terminal receives the configuration information sent by the base station, and acquires the identifiers of the predefined random access resources.

305. When random access resources corresponding to the MTC terminal are insufficient, the MTC terminal acquires the predefined random access resources according to the identifiers of the predefined random access resources.

Before the MTC terminal acquires the predefined random access resources when the random access resources corresponding to the MTC terminal are insufficient, the MTC terminal determines the coverage enhancement level of the MTC terminal, acquires, according to the coverage enhancement level of the MTC terminal, the random access resources corresponding to the coverage enhancement level of the MTC terminal, and uses the random access resources corresponding to the coverage enhancement level of the MTC terminal, as the random access resources corresponding to the MTC terminal.

The operation of determining, by the MTC terminal, the coverage enhancement level of the MTC terminal may be: determining, by the MTC terminal according to its own path loss, the coverage enhancement level of the MTC terminal.

Correspondingly, that the random access resources corresponding to the MTC terminal are insufficient may be that the random access resources corresponding to the coverage enhancement level of the MTC terminal are insufficient.

A method for detecting, by the MTC terminal, that the random access resources corresponding to the coverage enhancement level of the MTC terminal are insufficient may be: There is a relatively high probability that a conflict occurs in initiating a random access process by the MTC terminal.

The operation of detecting, by the MTC terminal, that there is a relatively high probability that a conflict occurs in initiating a random access process by the MTC terminal may be: when the MTC terminal still fails to access a network after initiating the random access process for a predefined quantity of times, determining, by the MTC terminal, that there is a relatively high probability that a conflict occurs in initiating the random access process, that is, the random access resources corresponding to the coverage enhancement level of the MTC terminal are insufficient.

The predefined quantity of times may be set and changed by the base station according to the coverage enhancement level of the MTC terminal. The predefined quantity of times is not specifically limited in the present invention.

The operation of acquiring, by the MTC terminal, the predefined random access resources according to the identifiers of the predefined random access resources may be:
acquiring, by the MTC terminal according to the identifiers of the predefined random access resources, the time-frequency resource TF-resource in the predefined time-frequency resources and the preamble that is included in the preamble resource group in the random access resources corresponding to the coverage enhancement level of the MTC terminal.

Alternatively, the operation of acquiring, by the MTC terminal, the predefined random access resources according to the identifiers of the predefined random access resources may be:
acquiring, by the MTC terminal according to the identifiers of the predefined random access resources, the predefined time-frequency resource TF-resource in the time-frequency resources in the random access resources corresponding to the coverage enhancement level of the MTC terminal, and acquiring a predefined preamble in the preamble resource group in the random access resources corresponding to the coverage enhancement level of the MTC terminal.

The predefined time-frequency resource TF-resource may appear periodically, and the predefined preamble may appear periodically.

For example, the predefined time-frequency resource TF-resource appears once in the system every predefined period; or the predefined preamble in the preamble resource group in the random access resources corresponding to the coverage enhancement level of the MTC terminal appears once every predefined period.

In this example, the MTC terminal may also receive, when the random access resources corresponding to the MTC terminal are insufficient, the configuration information sent by the base station, and acquire the identifiers of the predefined random access resources, which is not specifically limited in the present invention.

306. The MTC terminal initiates a random access process by using the acquired predefined random access resources.

The MTC terminal may initiate, by using the predefined random access resources, the random access process and may further notify the base station that the random access resources corresponding to the coverage enhancement level of the MTC terminal are insufficient.

When the MTC terminal acquires the predefined time-frequency resource TF-resource and the preamble that is included in the preamble resource group in the random access resources corresponding to the coverage enhancement level of the MTC terminal, the operation of initiating, by the MTC terminal, the random access process by using the acquired predefined random access resources may be:
sending, by the MTC terminal, the preamble that is included in the preamble resource group in the random access resources corresponding to the coverage enhancement level of the MTC terminal, to the base station over the time-frequency resource TF-resource in the predefined time-frequency resources, so as to initiate the random access process.

Further, the MTC terminal sends, to the base station over the time-frequency resource TF-resource in the predefined time-frequency resources, the preamble that is included in the preamble resource group in the random access resources corresponding to the coverage enhancement level of the MTC terminal, so as to notify the base station that the random access resources corresponding to the coverage enhancement level of the MTC terminal are insufficient.

When the operation of acquiring, by the MTC terminal, the predefined random access resources is: acquiring, by the MTC terminal, the predefined time-frequency resource TF-resource in the time-frequency resources TF-resources in the random access resources corresponding to the MTC terminal, and acquiring the predefined preamble in the preamble resource group in the random access resources corresponding to the coverage enhancement level of the MTC terminal, the operation of initiating, by the MTC terminal, the random access process by using the acquired predefined random access resources may be:
sending, by the MTC terminal, the predefined preamble in the preamble resource group in the random access resources corresponding to the coverage enhancement level of the MTC terminal, to the base station over the predefined time-frequency resource TF-resource in the time-frequency resources TF-resources in the random access resources corresponding to the MTC terminal, so as to initiate the random access process.

Further, the MTC terminal sends the predefined preamble in the preamble resource group in the random access resources corresponding to the coverage enhancement level of the MTC terminal, to the base station over the predefined time-frequency resource TF-resource in the time-frequency resources TF-resources in the random access resources corresponding to the MTC terminal, so as to notify the base station that the random access resources corresponding to the coverage enhancement level of the MTC terminal are insufficient.

307. The base station accepts the random access process that is initiated by the MTC terminal over the predefined random access resources.

The base station determines, according to the random access process that is initiated by the MTC terminal over the predefined random access resources, that the random access resources corresponding to the MTC terminal are insufficient.

In this example, the operation of accepting, by the base station, the random access process that is initiated by the MTC terminal over the predefined random access resources may be:
receiving, by the base station, the preamble that is included in the preamble resource group in the random access resources corresponding to the coverage enhancement level of the MTC terminal and that is sent by the MTC terminal over the time-frequency resource TF-resource in the predefined time-frequency resources; or
receiving, by the base station, the predefined preamble that is in the preamble resource group in the random access resources corresponding to the coverage enhancement level of the MTC terminal, and that is sent by the MTC terminal over the predefined time-frequency resource TF-resource in the random access resources corresponding to the coverage enhancement level of the MTC terminal.

The operation of determining, by the base station according to the random access process that is initiated by the MTC terminal over the predefined random access resources, that the random access resources corresponding to the MTC terminal are insufficient may be:
determining, by the base station according to the predefined random access resources, that the random access resources corresponding to the coverage enhancement level of the MTC terminal are insufficient.

Further, the base station determines the coverage enhancement level of the MTC terminal according to the predefined random access resources.

In this example, when the MTC terminal initiates, by using the predefined random access resources, the random access process to notify the base station that the random access resources corresponding to the coverage enhancement level of the MTC terminal are insufficient, the base station may further determine, according to the random access process that is initiated by the MTC terminal over the predefined random access resources, that the random access resources corresponding to the coverage enhancement level of the MTC terminal are insufficient, and determine the coverage enhancement level of the MTC terminal.

The operation of further determining, by the base station according to the random access process that is initiated by the MTC terminal over the predefined random access resources, that the random access resources corresponding to the coverage enhancement level of the MTC terminal are insufficient may be:
receiving, by the base station, the preamble that is included in the preamble resource group in the random access resources corresponding to the coverage enhancement level of the MTC terminal and that is sent by the MTC terminal over the time-frequency resource TF-resource in the predefined time-frequency resources; and determining that the random access resources corresponding to the coverage enhancement level of the MTC terminal are insufficient.

Further, the base station determines the coverage enhancement level of the MTC terminal according to the preamble that is included in the preamble resource group in the random access resources corresponding to the coverage enhancement level of the MTC terminal.

The operation of further determining, by the base station according to the random access process that is initiated by the MTC terminal over the predefined random access resources, that the random access resources corresponding to the coverage enhancement level of the MTC terminal are insufficient may further be:
receiving, by the base station, the predefined preamble that is in the preamble resource group in the random access resources corresponding to the coverage enhancement level of the MTC terminal, and that is sent by the MTC terminal over the predefined time-frequency resource TF-resource in the time-frequency resources in the random access resources corresponding to the coverage enhancement level of the MTC terminal; and determining that the random access resources corresponding to the coverage enhancement level of the MTC terminal are insufficient.

Further, the base station determines the coverage enhancement level of the MTC terminal according to the predefined time-frequency resource TF-resource in the time-frequency resources in the random access resources corresponding to the coverage enhancement level of the MTC terminal and/or the predefined preamble in the preamble resource group in the random access resources corresponding to the coverage enhancement level of the MTC terminal.

For example, the base station receives a Preamble 10 that is sent by the MTC terminal over a predefined TF-resource; determines, according to the predefined TF-resource, that random access resources corresponding to a coverage enhancement level are insufficient; and determines, according to the Preamble 10, that the coverage enhancement level of the MTC terminal is the coverage enhancement level 1.

308. The base station sends a response RAR message to the MTC terminal.

The response RAR message is used to notify the MTC terminal that the base station has received the random access process initiated by the MTC terminal.

309. The MTC terminal receives the response RAR message sent by the base station, and sends a message 3 to the base station according to the response RAR message, where the message 3 carries coverage enhancement level information of the MTC terminal.

The coverage enhancement level information includes a coverage enhancement level required value of the MTC terminal; or the coverage enhancement level information includes a difference between a coverage enhancement level required value of the MTC terminal and a coverage enhancement level value corresponding to random access resources used by the MTC terminal to initiate the random access process, or a difference between a coverage enhancement level value corresponding to random access resources used by the MTC terminal to initiate the random access process and a coverage enhancement level required value of the MTC terminal.

Further, the base station receives the message 3 sent by the MTC terminal, and determines the coverage enhancement level of the MTC terminal according to the coverage enhancement level information that is of the MTC terminal and carried in the message 3.

310. The base station increases random access resources corresponding to a coverage enhancement level of the MTC terminal.

The operation of increasing, by the base station, the random access resources corresponding to the coverage enhancement level of the MTC terminal may be:
acquiring, by the base station, a fourth predefined quantity of preambles from a preamble resource group in random access resources corresponding to another coverage enhancement level different from the coverage enhancement level of the MTC terminal; and transferring the acquired fourth predefined quantity of preambles to the random access resources corresponding to the coverage enhancement level of the MTC terminal, where the fourth predefined quantity is less than or equal to a quantity of preambles that are included in the preamble resource group.

The operation of increasing, by the base station, the random access resources corresponding to the coverage enhancement level of the MTC terminal may further be:
acquiring, by the base station, a fifth predefined quantity of preambles from preamble resources in random access resources corresponding to another coverage enhancement level different from the coverage enhancement level of the MTC terminal; and transferring the acquired fifth predefined quantity of preambles to the random access resources corresponding to the coverage enhancement level of the MTC terminal, where the fifth predefined quantity is less than or equal to a quantity of preambles that are included in the preamble resources.

The operation of increasing, by the base station, the random access resources corresponding to the coverage enhancement level of the MTC terminal may further be:
acquiring, by the base station, a sixth predefined quantity of preambles from preamble resources except random access resources corresponding to all coverage enhancement levels in the base station; and transferring the acquired sixth predefined quantity of preambles to the random access resources corresponding to the coverage enhancement level of the MTC terminal, where the sixth predefined quantity is less than or equal to a quantity of preambles that are included in the preamble resources except the random access resources corresponding to all the coverage enhancement levels in the base station.

The base station may randomly select another coverage enhancement level different from the coverage enhancement level of the MTC terminal, and the base station may also determine, according to a historical record, a coverage enhancement level corresponding to sufficient random access resources.

For example, the base station determines, according to a historical record, that random access resources corresponding to a coverage enhancement level 4 are sufficient; the base station acquires a Preamble 20 that is included in a preamble resource group in the random access resources corresponding to the coverage enhancement level 4, and transfers the Preamble 20 to random access resources corresponding to the coverage enhancement level 1 of the MTC terminal.

In this example, an MTC terminal acquires predefined random access resources when random access resources corresponding to the MTC terminal are insufficient, where the predefined random access resources are random access resources corresponding to the MTC terminal, or the predefined random access resources are random access resources except random access resources corresponding to the MTC terminal; and the MTC terminal initiates a random access process by using the acquired predefined random access resources. Therefore, a probability that a conflict occurs in randomly accessing a network is reduced, and random access resource utilization is improved. Further, the MTC terminal notifies a base station that random access resources corresponding to a coverage enhancement level of the MTC terminal are insufficient, and the base station increases the random access resources corresponding to the coverage enhancement level of the MTC terminal, so as to provide a better service for the MTC terminal.

### Example 3

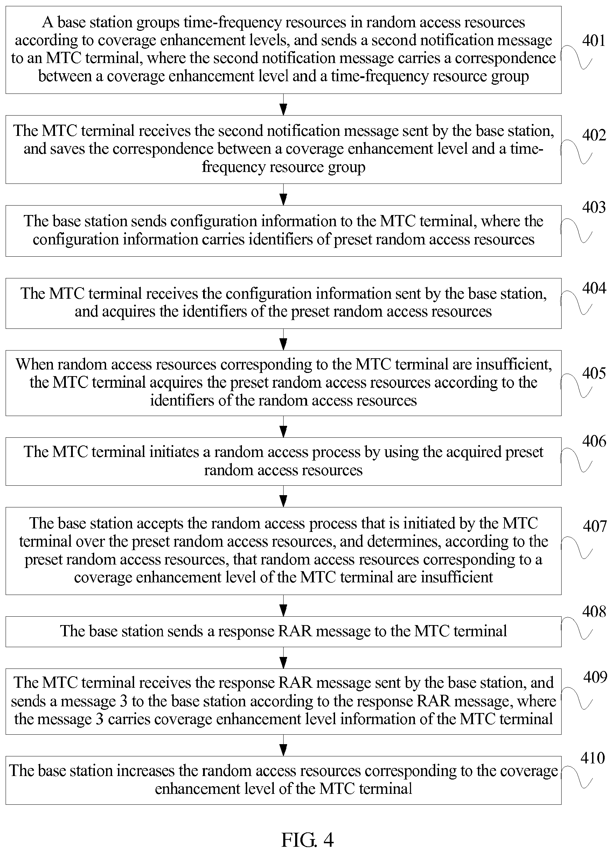

This example provides a method for randomly accessing a network. Grouping time-frequency resources in random access resources is used as an example for description in this embodiment of the present invention. Referring to FIG. 4, the method includes the following steps:
401. A base station groups time-frequency resources in random access resources according to coverage enhancement levels, and sends a second notification message to an MTC terminal, where the second notification message carries a correspondence between a coverage enhancement level and a time-frequency resource group.

The random access resources include a time-frequency resource and a preamble resource. The coverage enhancement level refers to a level of degree to which coverage needs to be enhanced when the MTC terminal communicates with the base station, and different coverage enhancement levels are corresponding to different coverage enhancement technologies or different combinations of coverage enhancement technologies. The MTC terminal is any MTC terminal for which the base station provides a service.

The base station allocates time-frequency resources TF-resources that are included in the time-frequency resources in the random access resources to each coverage enhancement level according to the coverage enhancement levels, for example, allocates, in an even manner, the time-frequency resources evenly to each coverage enhancement level, and sends the second notification message to all MTC terminals for which the base station provides a service, where the second notification message includes the correspondence between a coverage enhancement level and a time-frequency resource group.

The MTC terminal may acquire, according to a coverage enhancement level of the MTC terminal, a time-frequency resource TF-resource in a time-frequency resource group in random access resources corresponding to the coverage enhancement level of the MTC terminal.

402. The MTC terminal receives the second notification message sent by the base station, and saves the correspondence between a coverage enhancement level and a time-frequency resource group.

The MTC terminal saves the correspondence between a coverage enhancement level and a time-frequency resource group. When randomly accessing a network, the MTC terminal determines a time-frequency resource group according to a coverage enhancement level, selects one time-frequency resource TF-resource from the time-frequency resource group, and randomly accesses the network by using the selected time-frequency resource TF-resource.

403. The base station sends configuration information to the MTC terminal, where the configuration information carries identifiers of predefined random access resources.

The configuration information may further carry a correspondence between an identifier of a predefined random access resource and a predefined period. When random access resources corresponding to the MTC terminal are insufficient, the MTC terminal may acquire a predefined period according to the configuration information, and acquire a predefined random access resource according to the predefined period.

The predefined random access resources are used so that the MTC terminal initiates, by using the predefined random access resources, a random access process when the random access resources corresponding to the coverage enhancement level of the MTC terminal are insufficient.

The predefined random access resources are further used to notify the base station that the random access resources corresponding to the coverage enhancement level of the MTC terminal are insufficient.

In this example, the predefined random access resources are preambles in predefined preamble resources; or the predefined random access resources are a predefined time-frequency resource TF-resource that is included in a time-frequency resource group in the random access resources corresponding to the coverage enhancement level of the MTC terminal, and a predefined preamble that is included in preamble resources in the random access resources corresponding to the coverage enhancement level of the MTC terminal.

The predefined random access resources may appear periodically, or the predefined random access resources are configured by a system. For example, it is configured on the base station that a predefined TF-resource appears once every 5s.

404. The MTC terminal receives the configuration information sent by the base station, and acquires the identifiers of the predefined random access resources.

405. When random access resources corresponding to the MTC terminal are insufficient, the MTC terminal acquires the predefined random access resources according to the identifiers of the predefined random access resources.

Before the MTC terminal acquires the predefined random access resources when the random access resources corresponding to the MTC terminal are insufficient, the MTC terminal determines the coverage enhancement level of the MTC terminal, acquires, according to the coverage enhancement level of the MTC terminal, the random access resources corresponding to the coverage enhancement level of the MTC terminal, and uses the random access resources corresponding to the coverage enhancement level of the MTC terminal, as the random access resources corresponding to the MTC terminal.

The operation of determining, by the MTC terminal, the coverage enhancement level of the MTC terminal may be: determining, by the MTC terminal according to its own path loss, the coverage enhancement level of the MTC terminal.

Correspondingly, that the random access resources corresponding to the MTC terminal are insufficient may be that the random access resources corresponding to the coverage enhancement level of the MTC terminal are insufficient.

A method for detecting, by the MTC terminal, that the random access resources corresponding to the coverage enhancement level of the MTC terminal are insufficient may be: There is a relatively high probability that a conflict occurs in initiating a random access process by the MTC terminal.

The operation of detecting, by the MTC terminal, that there is a relatively high probability that a conflict occurs in initiating a random access process by the MTC terminal may be: when the MTC terminal still fails to access a network after initiating the random access process for a predefined quantity of times, determining, by the MTC terminal, that there is a relatively high probability that a conflict occurs in initiating the random access process, that is, the random access resources corresponding to the coverage enhancement level of the MTC terminal are insufficient.

The predefined quantity of times may be set and changed by the base station according to the coverage enhancement level of the MTC terminal. The predefined quantity of times is not specifically limited in the present invention.

The operation of acquiring, by the MTC terminal, the predefined random access resources according to the identifiers of the predefined random access resources may be:
acquiring, by the MTC terminal according to the identifiers of the predefined random access resources, the preamble in the predefined preamble resources and the time-frequency resource TF-resource that is included in the time-frequency resource group in the random access resources corresponding to the coverage enhancement level of the MTC terminal.

Alternatively, the operation of acquiring, by the MTC terminal, the predefined random access resources according to the identifiers of the predefined random access resources may be:
acquiring, by the MTC terminal according to the identifiers of the predefined random access resources, the predefined preamble in the preamble resources in the random access resources corresponding to the coverage enhancement level of the MTC terminal, and acquiring, by the MTC terminal, the predefined time-frequency resource TF-resource that is included in the time-frequency resource group in the random access resources corresponding to the coverage enhancement level of the MTC terminal.

The predefined preamble may appear periodically, and the predefined time-frequency resource TF-resource may appear periodically.

For example, the predefined preamble appears once in the system every predefined period; or the predefined time-frequency resource TF-resource that is included in the time-frequency resource group in the random access resources corresponding to the coverage enhancement level of the MTC terminal appears once every predefined period.

In this example, the MTC terminal may also receive, when the random access resources corresponding to the MTC terminal are insufficient, the configuration information sent by the base station, and acquire the identifiers of the predefined random access resources, which is not specifically limited in the present invention.

406. The MTC terminal initiates a random access process by using the acquired predefined random access resources.

When the operation of acquiring, by the MTC terminal, the predefined random access resources is: acquiring, by the MTC terminal, the preamble in the predefined preamble resources and the time-frequency resource TF-resource that is included in the time-frequency resource group in the random access resources corresponding to the coverage enhancement level of the MTC terminal, the operation of initiating, by the MTC terminal, the random access process by using the acquired predefined random access resources may be:
sending, by the MTC terminal, the acquired preamble to the base station over the acquired time-frequency resource TF-resource, so as to initiate the random access process.

Further, the MTC terminal sends the acquired preamble to the base station over the acquired time-frequency resource TF-resource, so as to notify the base station that the random access resources corresponding to the coverage enhancement level of the MTC terminal are insufficient.

When the operation of acquiring, by the MTC terminal, the predefined random access resources is: acquiring, by the MTC terminal, the predefined preamble in the preamble resources in the random access resources corresponding to the coverage enhancement level of the MTC terminal, and acquiring, by the MTC terminal, the predefined time-frequency resource TF-resource that is included in the time-frequency resource group in the random access resources corresponding to the coverage enhancement level of the MTC terminal, the operation of initiating, by the MTC terminal, the random access process by using the acquired predefined random access resources may be:
sending, by the MTC terminal, the acquired predefined preamble to the base station over the acquired predefined time-frequency resource TF-resource, so as to initiate the random access process.

Further, the MTC terminal sends the acquired predefined preamble to the base station over the acquired predefined time-frequency resource TF-resource, so as to notify the base station that the random access resources corresponding to the coverage enhancement level of the MTC terminal are insufficient.

407. The base station accepts the random access process that is initiated by the MTC terminal over the predefined random access resources, and determines, according to the predefined random access resources, that random access resources corresponding to a coverage enhancement level of the MTC terminal are insufficient.

The base station determines, according to the random access process that is initiated by the MTC terminal over the predefined random access resources, that the random access resources corresponding to the MTC terminal are insufficient.

In this example, the operation of accepting, by the base station, the random access process that is initiated by the MTC terminal over the predefined random access resources may be:
receiving, by the base station, the preamble that is in the predefined preamble resources and that is sent by the MTC terminal over the time-frequency resource TF-resource that is included in the time-frequency resource group in the random access resources corresponding to the coverage enhancement level of the MTC terminal; or
receiving, by the base station, the predefined preamble that is in the preamble resources in the random access resources corresponding to the coverage enhancement level of the MTC terminal, and that is sent by the MTC terminal over the predefined time-frequency resource TF-resource in the time-frequency resource group in the random access resources corresponding to the coverage enhancement level of the MTC terminal.

The operation of determining, by the base station according to the random access process that is initiated by the MTC terminal over the predefined random access resources, that the random access resources corresponding to the MTC terminal are insufficient may be:
determining, by the base station according to the predefined random access resources, that the random access resources corresponding to the coverage enhancement level of the MTC terminal are insufficient.

In this example, when the MTC terminal initiates, by using the predefined random access resources, the random access process to notify the base station that the random access resources corresponding to the coverage enhancement level of the MTC terminal are insufficient, the base station may further determine, according to the random access process that is initiated by the MTC terminal over the predefined random access resources, that the random access resources corresponding to the coverage enhancement level of the MTC terminal are insufficient.

Further, the base station may further determine the coverage enhancement level of the MTC terminal.

The operation of further determining, by the base station according to the random access process that is initiated by the MTC terminal over the predefined random access resources, that the random access resources corresponding to the coverage enhancement level of the MTC terminal are insufficient may be:
determining, by the base station according to the preamble that is in the predefined preamble resources and that is sent by the MTC terminal over the predefined time-frequency resource TF-resource in the time-frequency resource group in the random access resources corresponding to the coverage enhancement level of the MTC terminal, that the random access resources corresponding to the coverage enhancement level of the MTC terminal are insufficient.

Further, the base station determines the coverage enhancement level of the MTC terminal according to the time-frequency resource TF-resource that is included in the time-frequency resource group in the random access resources corresponding to the coverage enhancement level of the MTC terminal.

The operation of further determining, by the base station according to the random access process that is initiated by the MTC terminal over the predefined random access resources, that the random access resources corresponding to the coverage enhancement level of the MTC terminal are insufficient may further be:
determining, by the base station according to the predefined preamble that is in the preamble resources in the random access resources corresponding to the coverage enhancement level of the MTC terminal, and that is sent by the MTC terminal over the predefined time-frequency resource TF-resource in the time-frequency resource group in the random access resources corresponding to the coverage enhancement level of the MTC terminal, that the random access resources corresponding to the coverage enhancement level of the MTC terminal are insufficient.

Further, the base station determines the coverage enhancement level of the MTC terminal according to the predefined time-frequency resource TF-resource in the time-frequency resource group in the random access resources corresponding to the coverage enhancement level of the MTC terminal and/or the predefined preamble in the preamble resources in the random access resources corresponding to the coverage enhancement level of the MTC terminal.

408. The base station sends a response RAR message to the MTC terminal.

The response RAR message is used to notify the MTC terminal that the base station has received the random access process initiated by the MTC terminal.

409. The MTC terminal receives the response RAR message sent by the base station, and sends a message 3 to the base station according to the response RAR message, where the message 3 carries coverage enhancement level information of the MTC terminal.

The coverage enhancement level information includes a coverage enhancement level required value of the MTC terminal; or the coverage enhancement level information includes a difference between a coverage enhancement level required value of the MTC terminal and a coverage enhancement level value corresponding to random access resources used by the MTC terminal to initiate the random access process, or a difference between a coverage enhancement level value corresponding to random access resources used by the MTC terminal to initiate the random access process and a coverage enhancement level required value of the MTC terminal.

Further, the base station receives the message 3 sent by the MTC terminal, and determines the coverage enhancement level of the MTC terminal according to the coverage enhancement level information that is of the MTC terminal and carried in the message 3.

410. The base station increases the random access resources corresponding to the coverage enhancement level of the MTC terminal.

The operation of increasing, by the base station, the random access resources corresponding to the coverage enhancement level of the MTC terminal may be:
acquiring, by the base station, a first predefined quantity of time-frequency resources TF-resources from a time-frequency resource group in random access resources corresponding to another coverage enhancement level different from the coverage enhancement level of the MTC terminal; and transferring the acquired first predefined quantity of time-frequency resources TF-resources to the random access resources corresponding to the coverage enhancement level of the MTC terminal, where the first predefined quantity is less than or equal to a quantity of time-frequency resources TF-resources that are included in the time-frequency resource group.

The operation of increasing, by the base station, the random access resources corresponding to the coverage enhancement level of the MTC terminal may further be:
acquiring, by the base station, a second predefined quantity of time-frequency resources TF-resources from time-frequency resources in random access resources corresponding to another coverage enhancement level different from the coverage enhancement level of the MTC terminal; and transferring the acquired second predefined quantity of time-frequency resources TF-resources to the random access resources corresponding to the coverage enhancement level of the MTC terminal, where the second predefined quantity is less than or equal to a quantity of time-frequency resources TF-resources that are included in the time-frequency resources.

The operation of increasing, by the base station, the random access resources corresponding to the coverage enhancement level of the MTC terminal may further be:
acquiring, by the base station, a third predefined quantity of time-frequency resources TF-resources from time-frequency resources except random access resources corresponding to all coverage enhancement levels in the base station; and transferring the acquired third predefined quantity of time-frequency resources TF-resources to the random access resources corresponding to the coverage enhancement level of the MTC terminal, where the third predefined quantity is less than or equal to a quantity of time-frequency resources TF-resources that are included in the time-frequency resources except the random access resources corresponding to all the coverage enhancement levels in the base station.

The base station may randomly select another coverage enhancement level different from the coverage enhancement level of the MTC terminal, and the base station may also determine, according to a historical record, a coverage enhancement level corresponding to sufficient random access resources.

In this example, an MTC terminal acquires predefined random access resources when random access resources corresponding to the MTC terminal are insufficient, where the predefined random access resources are random access resources corresponding to the MTC terminal, or the predefined random access resources are random access resources except random access resources corresponding to the MTC terminal; and the MTC terminal initiates a random access process by using the acquired predefined random access resources. Therefore, a probability that a conflict occurs in randomly accessing a network is reduced, and random access resource utilization is improved. Further, the MTC terminal notifies a base station that random access resources corresponding to a coverage enhancement level of the MTC terminal are insufficient, and the base station increases the random access resources corresponding to the coverage enhancement level of the MTC terminal, so as to provide a better service for the MTC terminal.

### Example 4

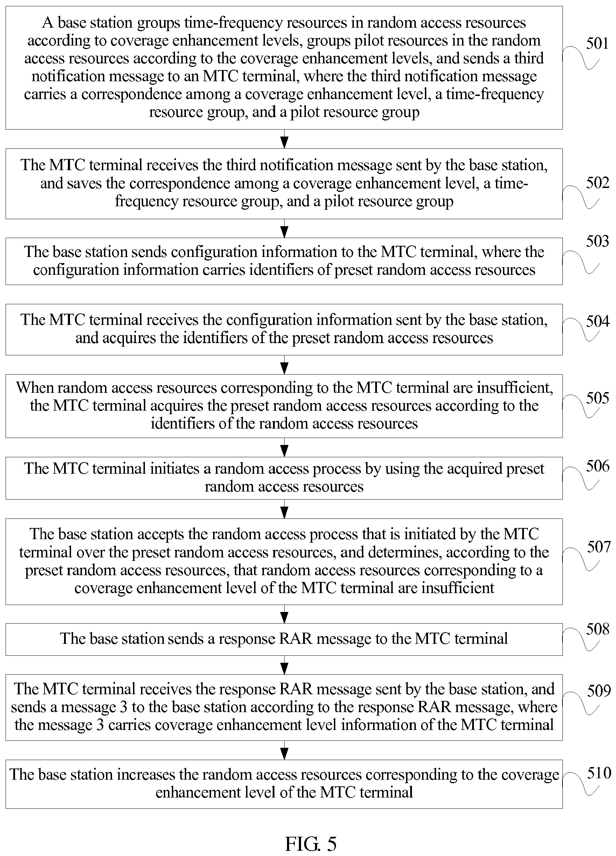

This example provides a method for randomly accessing a network. Grouping time-frequency resources and preamble resources in random access resources jointly is used as an example for description in this embodiment of the present invention. Referring to FIG. 5, the method includes the following steps:
501. A base station groups time-frequency resources in random access resources according to coverage enhancement levels, groups preamble resources in the random access resources according to the coverage enhancement levels, and sends a third notification message to an MTC terminal, where the third notification message carries a correspondence among a coverage enhancement level, a time-frequency resource group, and a preamble resource group.

The random access resources include a time-frequency resource and a preamble resource. The coverage enhancement level refers to a level of degree to which coverage needs to be enhanced when the MTC terminal communicates with the base station, and different coverage enhancement levels are corresponding to different coverage enhancement technologies or different combinations of coverage enhancement technologies. The MTC terminal is any MTC terminal for which the base station provides a service.

The base station allocates the time-frequency resources in the random access resources to each coverage enhancement level according to the coverage enhancement levels, for example, allocates, in an even manner, the time-frequency resources evenly to each coverage enhancement level; allocates the preamble resources in the random access resources to each coverage enhancement level, for example, allocates, in an even manner, the preamble resources evenly to each coverage enhancement level; and sends the third notification message to all MTC terminals for which the base station provides a service, where the third notification message carries the correspondence among a coverage enhancement level, a time-frequency resource group, and a preamble resource group.

502. The MTC terminal receives the third notification message sent by the base station, and saves the correspondence among a coverage enhancement level, a time-frequency resource group, and a preamble resource group.

The MTC terminal saves the correspondence among a coverage enhancement level, a time-frequency resource group, and a preamble resource group. When the MTC terminal randomly accesses a network, the MTC terminal determines a time-frequency resource group according to a coverage enhancement level, and acquires a time-frequency resource TF-resource from the time-frequency resource group; and the MTC terminal determines a preamble resource group according to the coverage enhancement level, selects one preamble from the determined preamble resource group, and sends the acquired preamble to the base station over the acquired time-frequency resource TF-resource, so as to randomly access the network.

503. The base station sends configuration information to the MTC terminal, where the configuration information carries identifiers of predefined random access resources.

The configuration information may further carry a correspondence between an identifier of a predefined random access resource and a predefined period. When random access resources corresponding to the MTC terminal are insufficient, the MTC terminal may acquire a predefined period according to the configuration information, and acquire a predefined random access resource according to the predefined period.

The predefined random access resources are used so that the MTC terminal initiates, by using the predefined random access resources, a random access process when random access resources corresponding to a coverage enhancement level of the MTC terminal are insufficient.

The predefined random access resources are further used to notify the base station that the random access resources corresponding to the coverage enhancement level of the MTC terminal are insufficient.

In this example, the predefined random access resources are a predefined time-frequency resource TF-resource that is included in a time-frequency resource group in the random access resources corresponding to the coverage enhancement level of the MTC terminal, and a predefined preamble in a preamble resource group in the random access resources corresponding to the coverage enhancement level of the MTC terminal; or
the predefined random access resources are a preamble except the random access resources corresponding to the coverage enhancement level of the MTC terminal, and a predefined time-frequency resource TF-resource in a time-frequency resource group in the random access resources corresponding to the coverage enhancement level of the MTC terminal; or
the predefined random access resources are a time-frequency resource TF-resource except the random access resources corresponding to the coverage enhancement level of the MTC terminal, and a predefined preamble that is included in a preamble resource group in the random access resources corresponding to the coverage enhancement level of the MTC terminal; or
the predefined random access resources are a predefined time-frequency resource TF-resource except the random access resources corresponding to the coverage enhancement level of the MTC terminal, and a predefined preamble except the random access resources corresponding to the coverage enhancement level of the MTC terminal.

The predefined random access resources may appear periodically, for example, it is configured on the base station that a predefined TF-resource appears once every 5s; or the predefined random access resources are configured by a system.

504. The MTC terminal receives the configuration information sent by the base station, and acquires the identifiers of the predefined random access resources.

505. When random access resources corresponding to the MTC terminal are insufficient, the MTC terminal acquires the predefined random access resources according to the identifiers of the predefined random access resources.

Before the MTC terminal acquires the predefined random access resources when the random access resources corresponding to the MTC terminal are insufficient, the MTC terminal determines the coverage enhancement level of the MTC terminal, acquires, according to the coverage enhancement level of the MTC terminal, the random access resources corresponding to the coverage enhancement level of the MTC terminal, and uses the random access resources corresponding to the coverage enhancement level of the MTC terminal, as the random access resources corresponding to the MTC terminal.

The operation of determining, by the MTC terminal, the coverage enhancement level of the MTC terminal may be: determining, by the MTC terminal according to its own path loss, the coverage enhancement level of the MTC terminal.

Correspondingly, that the random access resources corresponding to the MTC terminal are insufficient may be that the random access resources corresponding to the coverage enhancement level of the MTC terminal are insufficient.

A method for detecting, by the MTC terminal, that the random access resources corresponding to the coverage enhancement level of the MTC terminal are insufficient may be: There is a relatively high probability that a conflict occurs in initiating a random access process by the MTC terminal.

The operation of detecting, by the MTC terminal, that there is a relatively high probability that a conflict occurs in initiating a random access process by the MTC terminal may be: when the MTC terminal still fails to access a network after initiating the random access process for a predefined quantity of times, determining, by the MTC terminal, that there is a relatively high probability that a conflict occurs in initiating the random access process, that is, the random access resources corresponding to the coverage enhancement level of the MTC terminal are insufficient.

The predefined quantity of times is set and changed according to the coverage enhancement level of the MTC terminal. The predefined quantity of times is not specifically limited in the present invention.

The operation of acquiring, by the MTC terminal, the predefined random access resources according to the identifiers of the predefined random access resources may be:
acquiring, by the MTC terminal according to the identifiers of the predefined random access resources, the predefined time-frequency resource TF-resource that is included in the time-frequency resource group in the random access resources corresponding to the coverage enhancement level of the MTC terminal, and the predefined preamble in the preamble resource group in the random access resources corresponding to the coverage enhancement level of the MTC terminal; or
the operation of acquiring, by the MTC terminal, the predefined random access resources according to the identifiers of the predefined random access resources may be:
   acquiring, by the MTC terminal according to the identifiers of the predefined random access resources, the preamble except the random access resources corresponding to the coverage enhancement level of the MTC terminal, and the predefined time-frequency resource TF-resource in the time-frequency resource group in the random access resources corresponding to the coverage enhancement level of the MTC terminal; or
   the operation of acquiring, by the MTC terminal, the predefined random access resources according to the identifiers of the predefined random access resources may be:
      acquiring, by the MTC terminal according to the identifiers of the predefined random access resources, a preamble that is included in the preamble resource group in the random access resources corresponding to the coverage enhancement level of the MTC terminal, and the time-frequency resource TF-resource except the random access resources corresponding to the coverage enhancement level of the MTC terminal; or
      the operation of acquiring, by the MTC terminal, the predefined random access resources according to the identifiers of the predefined random access resources may be:
         acquiring, by the MTC terminal according to the identifiers of the predefined random access resources, the predefined time-frequency resource TF-resource except the random access resources corresponding to the coverage enhancement level of the MTC terminal, and the predefined preamble except the random access resources corresponding to the coverage enhancement level of the MTC terminal.

In this example, the MTC terminal may also receive, when the random access resources corresponding to the MTC terminal are insufficient, the configuration information sent by the base station, and acquire the identifiers of the predefined random access resources, which is not specifically limited in the present invention.

506. The MTC terminal initiates a random access process by using the acquired predefined random access resources.

The MTC terminal may initiate, by using the predefined random access resources, the random access process and may further notify the base station that the random access resources corresponding to the coverage enhancement level of the MTC terminal are insufficient.

When the operation of acquiring, by the MTC terminal, the predefined random access resources according to the identifiers of the predefined random access resources is: acquiring, by the MTC terminal, the predefined time-frequency resource TF-resource that is included in the time-frequency resource group in the random access resources corresponding to the coverage enhancement level of the MTC terminal, and the predefined preamble in the preamble resource group in the random access resources corresponding to the coverage enhancement level of the MTC terminal, the operation of initiating, by the MTC terminal, the random access process by using the acquired predefined random access resources is:
sending, by the MTC terminal, the acquired predefined preamble to the base station over the acquired predefined time-frequency resource TF-resource, so as to initiate the random access process.

Further, the MTC terminal sends the acquired predefined preamble to the base station over the acquired predefined time-frequency resource TF-resource, so as to notify the base station that the random access resources corresponding to the coverage enhancement level of the MTC terminal are insufficient.

When the operation of acquiring, by the MTC terminal, the predefined random access resources according to the identifiers of the predefined random access resources is: acquiring, by the MTC terminal, the preamble that is included in the preamble resource group in the random access resources corresponding to the coverage enhancement level of the MTC terminal, and the predefined time-frequency resource TF-resource in the time-frequency resource group in the random access resources corresponding to the coverage enhancement level of the MTC terminal, the operation of initiating, by the MTC terminal, the random access process by using the acquired predefined random access resources is:
sending, by the MTC terminal, the acquired preamble to the base station over the acquired predefined time-frequency resource TF-resource, so as to initiate the random access process.

Further, the MTC terminal sends the acquired preamble to the base station over the acquired predefined time-frequency resource TF-resource, so as to notify the base station that the random access resources corresponding to the coverage enhancement level of the MTC terminal are insufficient.

When the operation of acquiring, by the MTC terminal, the predefined random access resources according to the identifiers of the predefined random access resources is: acquiring, by the MTC terminal, the preamble except the random access resources corresponding to the coverage enhancement level of the MTC terminal, and the predefined time-frequency resource TF-resource in the time-frequency resource group in the random access resources corresponding to the coverage enhancement level of the MTC terminal, the operation of initiating, by the MTC terminal, the random access process by using the acquired predefined random access resources is:
sending, by the MTC terminal, the acquired preamble to the base station over the acquired predefined time-frequency resource TF-resource, so as to initiate the random access process.

Further, the MTC terminal sends the acquired preamble to the base station over the acquired predefined time-frequency resource TF-resource, so as to notify the base station that the random access resources corresponding to the coverage enhancement level of the MTC terminal are insufficient.

When the operation of acquiring, by the MTC terminal, the predefined random access resources according to the identifiers of the predefined random access resources is: acquiring, by the MTC terminal, the predefined time-frequency resource TF-resource except the random access resources corresponding to the coverage enhancement level of the MTC terminal, and the predefined preamble except the random access resources corresponding to the coverage enhancement level of the MTC terminal, the operation of initiating, by the MTC terminal, the random access process by using the acquired predefined random access resources is:
sending, by the MTC terminal, the acquired predefined preamble to the base station over the acquired predefined time-frequency resource TF-resource, so as to initiate the random access process.

Further, the MTC terminal sends the acquired predefined preamble to the base station over the acquired predefined time-frequency resource TF-resource, so as to notify the base station that the random access resources corresponding to the coverage enhancement level of the MTC terminal are insufficient.

507. The base station accepts the random access process that is initiated by the MTC terminal over the predefined random access resources, and determines, according to the predefined random access resources, that random access resources corresponding to a coverage enhancement level of the MTC terminal are insufficient.

The base station determines, according to the random access process that is initiated by the MTC terminal over the predefined random access resources, that the random access resources corresponding to the MTC terminal are insufficient.

In this example, the operation of accepting, by the base station, the random access process that is initiated by the MTC terminal over the predefined random access resources may be:
receiving, by the base station, the predefined preamble that is in the preamble resource group and that is sent by the MTC terminal over the predefined time-frequency resource TF-resource in the time-frequency resource group in the random access resources corresponding to the coverage enhancement level of the MTC terminal; or
receiving, by the base station, the preamble, except the random access resources corresponding to the coverage enhancement level of the MTC terminal, that is sent by the MTC terminal over the predefined time-frequency resource TF-resource in the time-frequency resource group in the random access resources corresponding to the coverage enhancement level of the MTC terminal; or
receiving, by the base station, the predefined preamble that is included in the preamble resource group in the random access resources corresponding to the coverage enhancement level of the MTC terminal, and that is sent by the MTC terminal over the time-frequency resource TF-resource except the random access resources corresponding to the coverage enhancement level of the MTC terminal; or
receiving, by the base station, the predefined preamble, except the random access resources corresponding to the coverage enhancement level of the MTC terminal, that is sent by the MTC terminal over the predefined time-frequency resource TF-resource except the random access resources corresponding to the coverage enhancement level of the MTC terminal.

The operation of determining, by the base station according to the random access process that is initiated by the MTC terminal over the predefined random access resources, that the random access resources corresponding to the MTC terminal are insufficient may be:
determining, by the base station according to the predefined random access resources, that the random access resources corresponding to the coverage enhancement level of the MTC terminal are insufficient, and determining the coverage enhancement level of the MTC terminal.

In this example, when the MTC terminal initiates, by using the predefined random access resources, the random access process to notify the base station that the random access resources corresponding to the coverage enhancement level of the MTC terminal are insufficient, the base station may further determine, according to the random access process that is initiated by the MTC terminal over the predefined random access resources, that the random access resources corresponding to the coverage enhancement level of the MTC terminal are insufficient, and determine the coverage enhancement level of the MTC terminal.

The operation of further determining, by the base station according to the random access process that is initiated by the MTC terminal over the predefined random access resources, that the random access resources corresponding to the coverage enhancement level of the MTC terminal are insufficient may be:
determining, by the base station according to the predefined preamble that is in the preamble resource group and that is sent by the MTC terminal over the predefined time-frequency resource TF-resource in the time-frequency resource group in the random access resources corresponding to the coverage enhancement level of the MTC terminal, that the random access resources corresponding to the coverage enhancement level of the MTC terminal are insufficient.

Further, the base station determines the coverage enhancement level of the MTC terminal according to the predefined time-frequency resource TF-resource in the time-frequency resource group in the random access resources corresponding to the coverage enhancement level of the MTC terminal, and the predefined preamble in the preamble resource group in the random access resources corresponding to the coverage enhancement level of the MTC terminal.

The operation of further determining, by the base station according to the random access process that is initiated by the MTC terminal over the predefined random access resources, that the random access resources corresponding to the coverage enhancement level of the MTC terminal are insufficient may further be:
determining, by the base station according to the preamble, except the random access resources corresponding to the coverage enhancement level of the MTC terminal, that is sent by the MTC terminal over the predefined time-frequency resource TF-resource in the time-frequency resource group in the random access resources corresponding to the coverage enhancement level of the MTC terminal, that the random access resources corresponding to the coverage enhancement level of the MTC terminal are insufficient.

Further, the base station determines the coverage enhancement level of the MTC terminal according to the predefined time-frequency resource TF-resource in the time-frequency resource group in the random access resources corresponding to the coverage enhancement level of the MTC terminal, and the preamble in the preamble resource group in the random access resources corresponding to the coverage enhancement level of the MTC terminal.

The operation of further determining, by the base station according to the random access process that is initiated by the MTC terminal over the predefined random access resources, that the random access resources corresponding to the coverage enhancement level of the MTC terminal are insufficient may further be:
determining, by the base station according to the preamble that is in the preamble resource group in the random access resources corresponding to the coverage enhancement level of the MTC terminal, and that is sent by the MTC terminal over the time-frequency resource TF-resource except the random access resources corresponding to the coverage enhancement level of the MTC terminal, that the random access resources corresponding to the coverage enhancement level of the MTC terminal are insufficient.

Further, the base station determines the coverage enhancement level of the MTC terminal according to the preamble in the preamble resource group in the random access resources corresponding to the coverage enhancement level of the MTC terminal.

The operation of further determining, by the base station according to the random access process that is initiated by the MTC terminal over the predefined random access resources, that the random access resources corresponding to the coverage enhancement level of the MTC terminal are insufficient may further be:
determining, by the base station according to the predefined preamble, except the random access resources corresponding to the coverage enhancement level of the MTC terminal, that is sent by the MTC terminal over the predefined time-frequency resource TF-resource except the random access resources corresponding to the coverage enhancement level of the MTC terminal, that the random access resources corresponding to the coverage enhancement level of the MTC terminal are insufficient.

Further, the base station determines the coverage enhancement level of the MTC terminal according to the predefined time-frequency resource TF-resource and/or the predefined preamble.

508. The base station sends a response RAR message to the MTC terminal.

The response RAR message is used to notify the MTC terminal that the base station has received the random access process initiated by the MTC terminal.

509. The MTC terminal receives the response RAR message sent by the base station, and sends a message 3 to the base station according to the response RAR message, where the message 3 carries coverage enhancement level information of the MTC terminal.

The coverage enhancement level information includes a coverage enhancement level required value of the MTC terminal; or the coverage enhancement level information includes a difference between a coverage enhancement level required value of the MTC terminal and a coverage enhancement level value corresponding to random access resources used by the MTC terminal to initiate the random access process, or a difference between a coverage enhancement level value corresponding to random access resources used by the MTC terminal to initiate the random access process and a coverage enhancement level required value of the MTC terminal.

Further, the base station receives the message 3 sent by the MTC terminal, and determines the coverage enhancement level of the MTC terminal according to the coverage enhancement level information that is of the MTC terminal and carried in the message 3.

510. The base station increases the random access resources corresponding to the coverage enhancement level of the MTC terminal.

The operation of increasing, by the base station, the random access resources corresponding to the coverage enhancement level of the MTC terminal may be:
acquiring, by the base station, a seventh predefined quantity of time-frequency resources TF-rcsourccs and an eighth predefined quantity of preambles respectively from a timc-frcqucncy resource group and a preamble resource group that are in random access resources corresponding to another coverage enhancement level different from the coverage enhancement level of the MTC terminal; and transferring the acquired seventh predefined quantity of time-frequency resources TF-resources and the acquired eighth predefined quantity of preambles to the random access resources corresponding to the coverage enhancement level of the MTC terminal, where the seventh predefined quantity is less than or equal to a quantity of time-frequency resources TF-resources that are included in the time-frequency resource group, and the eighth predefined quantity is less than or equal to a quantity of preambles that are included in the preamble resource group.

The operation of increasing, by the base station, the random access resources corresponding to the coverage enhancement level of the MTC terminal may further be:
acquiring, by the base station, a ninth predefined quantity of time-frequency resources TF-resources and a tenth predefined quantity of preambles respectively from time-frequency resources and preamble resources that are in random access resources corresponding to another coverage enhancement level different from the coverage enhancement level of the MTC terminal; and transferring the acquired ninth predefined quantity of time-frequency resources TF-resources and the acquired tenth predefined quantity of preambles to the random access resources corresponding to the coverage enhancement level of the MTC terminal, where the ninth predefined quantity is less than or equal to a quantity of time-frequency resources TF-resources that are included in the time-frequency resources, and the tenth predefined quantity is less than or equal to a quantity of preambles that are included in the preamble resources.

The operation of increasing, by the base station, the random access resources corresponding to the coverage enhancement level of the MTC terminal may be:
acquiring, by the base station, an eleventh predefined quantity of time-frequency resources TF-resources and a twelfth predefined quantity of preambles respectively from time-frequency resources except random access resources corresponding to all coverage enhancement levels in the base station and preamble resources except the random access resources corresponding to all the coverage enhancement levels in the base station; and transferring the acquired eleventh predefined quantity of time-frequency resources TF-resources and the acquired twelfth predefined quantity of preambles to the random access resources corresponding to the coverage enhancement level of the MTC terminal, where the eleventh predefined quantity is less than or equal to a quantity of time-frequency resources TF-resources that are included in the time-frequency resources except the random access resources corresponding to all the coverage enhancement levels in the base station, and the twelfth predefined quantity is less than or equal to a quantity of preambles that are included in the preamble resources except the random access resources corresponding to all the coverage enhancement levels in the base station.

The base station may randomly select another coverage enhancement level different from the coverage enhancement level of the MTC terminal, and the base station may also determine, according to a historical record, a coverage enhancement level corresponding to sufficient random access resources.

In this example, an MTC terminal acquires predefined random access resources when random access resources corresponding to the MTC terminal are insufficient, where the predefined random access resources are random access resources corresponding to the MTC terminal, or the predefined random access resources are random access resources except random access resources corresponding to the MTC terminal; and the MTC terminal initiates a random access process by using the acquired predefined random access resources. Therefore, a probability that a conflict occurs in randomly accessing a network is reduced, and random access resource utilization is improved. Further, the MTC terminal notifies a base station that random access resources corresponding to a coverage enhancement level of the MTC terminal are insufficient, and the base station increases the random access resources corresponding to the coverage enhancement level of the MTC terminal, so as to provide a better service for the MTC terminal.

### Example 5

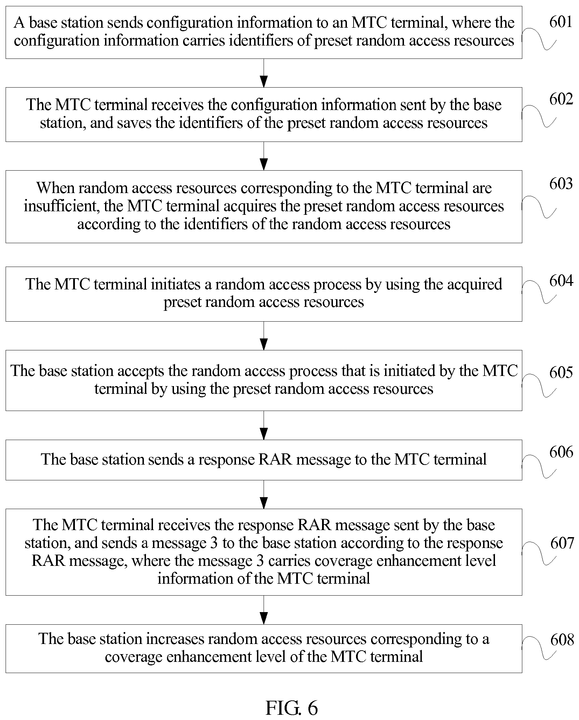

This example provides a method for randomly accessing a network. In this embodiment of the present invention, an example in which predefined random access resources are random access resources corresponding to another coverage enhancement level different from a coverage enhancement level of an MTC terminal is used for description. Referring to FIG. 6, the method includes the following steps:
601. A base station sends configuration information to an MTC terminal, where the configuration information carries identifiers of predefined random access resources.

The random access resources include a time-frequency resource and a preamble resource. A coverage enhancement level refers to a level of degree to which coverage needs to be enhanced when the MTC terminal communicates with the base station, and different coverage enhancement levels are corresponding to different coverage enhancement technologies or different combinations of coverage enhancement technologies. The MTC terminal is any MTC terminal for which the base station provides a service.

The configuration information may further carry a correspondence between an identifier of a predefined random access resource and a predefined period. When random access resources corresponding to the MTC terminal are insufficient, the MTC terminal may acquire a predefined period according to the configuration information, and acquire a predefined random access resource according to the predefined period.

In this example, the MTC terminal is a terminal that requires coverage enhancement; the predefined random access resources are random access resources corresponding to another coverage enhancement level different from a coverage enhancement level of the MTC terminal, for example, random access resources corresponding to a coverage enhancement level that is higher than the coverage enhancement level of the MTC terminal. The configuration information may further carry a correspondence between a coverage enhancement level and a time-frequency resource and a preamble resource.

Different coverage enhancement levels are corresponding to different preamble resources and/or time-frequency resources, for example, when a coverage enhancement level is 0, corresponding preamble resources are a Preamble 0 and a Preamble 1, and corresponding time-frequency resources TF-resources are time-frequency resources over which four preambles are sent or received at a time.

602. The MTC terminal receives the configuration information sent by the base station, and saves the identifiers of the predefined random access resources.

The MTC terminal further saves the correspondence between a coverage enhancement level and a time-frequency resource and a preamble resource; when the MTC terminal randomly accesses a network, the MTC terminal determines a time-frequency resource and a preamble resource according to the coverage enhancement level of the MTC terminal.

Before the MTC terminal determines the time-frequency resource TF-resource according to the coverage enhancement level of the MTC terminal, the MTC terminal determines the coverage enhancement level of the MTC terminal according to its own path loss.

603. When random access resources corresponding to the MTC terminal are insufficient, the MTC terminal acquires the predefined random access resources according to the identifiers of the predefined random access resources.

Before the MTC terminal acquires the predefined random access resources when the random access resources corresponding to the MTC terminal are insufficient, the MTC terminal determines the coverage enhancement level of the MTC terminal, acquires, according to the coverage enhancement level of the MTC terminal, random access resources corresponding to the coverage enhancement level of the MTC terminal, and uses the random access resources corresponding to the coverage enhancement level of the MTC terminal, as the random access resources corresponding to the MTC terminal.

Correspondingly, that the random access resources corresponding to the MTC terminal are insufficient may be that the random access resources corresponding to the coverage enhancement level of the MTC terminal are insufficient.

A method for detecting, by the MTC terminal, that the random access resources corresponding to the coverage enhancement level of the MTC terminal are insufficient may be: There is a relatively high probability that a conflict occurs in initiating a random access process by the MTC terminal.

The operation of detecting, by the MTC terminal, that there is a relatively high probability that a conflict occurs in initiating a random access process by the MTC terminal may be: when the MTC terminal still fails to access a network after initiating the random access process for a predefined quantity of times, determining, by the MTC terminal, that there is a relatively high probability that a conflict occurs in initiating the random access process, that is, the random access resources corresponding to the coverage enhancement level of the MTC terminal are insufficient.

The predefined quantity of times may be set and changed by the base station according to the coverage enhancement level of the MTC terminal. The predefined quantity of times is not specifically limited in the present invention.

The operation of acquiring, by the MTC terminal, the predefined random access resources according to the identifiers of the predefined random access resources may be:
acquiring, by the MTC terminal according to the identifiers of the predefined random access resources, the another coverage enhancement level different from the coverage enhancement level of the MTC terminal; and acquiring the predefined random access resources according to the acquired another coverage enhancement level different from the coverage enhancement level of the MTC terminal.

The acquiring the predefined random access resources according to the another coverage enhancement level different from the coverage enhancement level of the MTC terminal may be:
acquiring, by the MTC terminal, a time-frequency resource TF-resource and a preamble that are in random access resources corresponding to the another coverage enhancement level different from the coverage enhancement level of the MTC terminal.

The acquiring the predefined random access resources according to the another coverage enhancement level different from the coverage enhancement level of the MTC terminal may further be:
acquiring, by the MTC terminal, a time-frequency resource TF-resource in random access resources corresponding to the another coverage enhancement level different from the coverage enhancement level of the MTC terminal; and
acquiring, by the MTC terminal, a preamble in the preamble resources in the random access resources corresponding to the coverage enhancement level of the MTC terminal.

The acquiring the predefined random access resources according to the another coverage enhancement level different from the coverage enhancement level of the MTC terminal may further be:
acquiring, by the MTC terminal, a preamble resource in random access resources corresponding to the another coverage enhancement level different from the coverage enhancement level of the MTC terminal; and
acquiring, by the MTC terminal, a time-frequency resource TF-resource in the time-frequency resources in the random access resources corresponding to the coverage enhancement level of the MTC terminal.

The acquiring the predefined random access resources according to the another coverage enhancement level different from the coverage enhancement level of the MTC terminal may be:
acquiring, by the MTC terminal, a time-frequency resource TF-resource in random access resources corresponding to the another coverage enhancement level different from the coverage enhancement level of the MTC terminal; and
acquiring, by the MTC terminal, a preamble that is included in a preamble resource group in the random access resources corresponding to the coverage enhancement level of the MTC terminal.

604. The MTC terminal initiates a random access process by using the acquired predefined random access resources.

Specifically, the MTC terminal sends an acquired preamble to the base station over an acquired time-frequency resource TF-resource, so as to initiate the random access process.

The operation of initiating, by the MTC terminal, the random access process by using the acquired predefined random access resources may further be:
sending, by the MTC terminal, the preamble in the random access resources corresponding to the another coverage enhancement level different from the coverage enhancement level of the MTC terminal, to the base station over the time-frequency resource TF-resource in the random access resources corresponding to the another coverage enhancement level different from the coverage enhancement level of the MTC terminal, so as to initiate the random access process.

The operation of initiating, by the MTC terminal, the random access process by using the acquired predefined random access resources may further be:
sending, by the MTC terminal, the preamble in the preamble resources in the random access resources corresponding to the coverage enhancement level of the MTC terminal, to the base station over the time-frequency resource TF-resource in the random access resources corresponding to the another coverage enhancement level different from the coverage enhancement level of the MTC terminal, so as to initiate the random access process.

The operation of initiating, by the MTC terminal, the random access process by using the acquired predefined random access resources may further be:
sending, by the MTC terminal, the preamble resource in the random access resources corresponding to the another coverage enhancement level different from the coverage enhancement level of the MTC terminal, to the base station over the time-frequency resource TF-resource in the time-frequency resources in the random access resources corresponding to the coverage enhancement level of the MTC terminal, so as to initiate the random access process.

The operation of initiating, by the MTC terminal, the random access process by using the acquired predefined random access resources may further be:
sending, by the MTC terminal, the preamble that is included in the preamble resource group in the random access resources corresponding to the coverage enhancement level of the MTC terminal, to the base station over the time-frequency resource TF-resource in the random access resources corresponding to the another coverage enhancement level different from the coverage enhancement level of the MTC terminal, so as to initiate the random access process.

The operation of initiating, by the MTC terminal, the random access process by using the acquired predefined random access resources may further be:
acquiring, by the MTC terminal according to the coverage enhancement level of the MTC terminal and/or the another coverage enhancement level different from the coverage enhancement level of the MTC terminal, power at which the MTC terminal sends a preamble; and sending the acquired preamble to the base station over the acquired time-frequency resource TF-resource at the acquired power for sending the preamble, so as to initiate the random access process.

The MTC terminal may initiate, by using the acquired predefined random access resources, the random access process and may further notify the base station that the random access resources corresponding to the coverage enhancement level of the MTC terminal are insufficient.

The MTC terminal sends the acquired preamble to the base station over the acquired time-frequency resource TF-resource, so as to notify the base station that the random access resources corresponding to the coverage enhancement level of the MTC terminal are insufficient.

605. The base station accepts the random access process that is initiated by the MTC terminal by using the predefined random access resources.

The base station determines, according to the random access process that is initiated by the MTC terminal over the predefined random access resources, that the random access resources corresponding to the MTC terminal are insufficient.

In this example, the operation of accepting, by the base station, the random access process that is initiated by the MTC terminal over the predefined random access resources may be:
receiving, by the base station, a preamble that is sent by the MTC terminal over an acquired time-frequency resource TF-resource.

The operation of receiving, by the base station, the preamble that is sent by the MTC terminal over the acquired time-frequency resource TF-resource may be:
receiving, by the base station, the preamble that is in the random access resources corresponding to the another coverage enhancement level different from the coverage enhancement level of the MTC terminal, and that is sent by the MTC terminal over the time-frequency resource TF-resource in the random access resources corresponding to the another coverage enhancement level different from the coverage enhancement level of the MTC terminal.

Further, the base station determines, according to the preamble that is in the random access resources corresponding to the another coverage enhancement level different from the coverage enhancement level of the MTC terminal, and that is sent by the MTC terminal over the time-frequency resource TF-resource in the random access resources corresponding to the another coverage enhancement level different from the coverage enhancement level of the MTC terminal, that the random access resources corresponding to the coverage enhancement level of the MTC terminal are insufficient.

The operation of receiving, by the base station, the preamble that is sent by the MTC terminal over the acquired time-frequency resource TF-resource may further be:
receiving, by the base station, the preamble that is in the preamble resources in the random access resources corresponding to the coverage enhancement level of the MTC terminal, and that is sent by the MTC terminal over the time-frequency resource TF-resource in the random access resources corresponding to the another coverage enhancement level different from the coverage enhancement level of the MTC terminal.

Further, the base station determines, according to the preamble that is in the preamble resources in the random access resources corresponding to the coverage enhancement level of the MTC terminal, and that is sent by the MTC terminal over the time-frequency resource TF-resource in the random access resources corresponding to the another coverage enhancement level different from the coverage enhancement level of the MTC terminal, that the random access resources corresponding to the coverage enhancement level of the MTC terminal are insufficient.

The operation of receiving, by the base station, the preamble that is sent by the MTC terminal over the acquired time-frequency resource TF-resource may further be:
receiving, by the base station, the preamble resource that is in the random access resources corresponding to the another coverage enhancement level different from the coverage enhancement level of the MTC terminal, and that is sent by the MTC terminal over the time-frequency resource TF-resource in the time-frequency resources in the random access resources corresponding to the coverage enhancement level of the MTC terminal.

Further, the base station determines, according to the preamble resource that is in the random access resources corresponding to the another coverage enhancement level different from the coverage enhancement level of the MTC terminal, and that is sent by the MTC terminal over the time-frequency resource TF-resource in the time-frequency resources in the random access resources corresponding to the coverage enhancement level of the MTC terminal, that the random access resources corresponding to the coverage enhancement level of the MTC terminal are insufficient.

The operation of receiving, by the base station, the preamble that is sent by the MTC terminal over the acquired time-frequency resource TF-resource may further be:
receiving, by the base station, the preamble that is included in the preamble resource group in the random access resources corresponding to the coverage enhancement level of the MTC terminal, and that is sent by the MTC terminal over the time-frequency resource TF-resource in the random access resources corresponding to the another coverage enhancement level different from the coverage enhancement level of the MTC terminal.

Further, the base station determines, according to the preamble that is included in the preamble resource group in the random access resources corresponding to the coverage enhancement level of the MTC terminal, and that is sent by the MTC terminal over the time-frequency resource TF-resource in the random access resources corresponding to the another coverage enhancement level different from the coverage enhancement level of the MTC terminal, that the random access resources corresponding to the coverage enhancement level of the MTC terminal are insufficient.

606. The base station sends a response RAR message to the MTC terminal.

The response RAR message is used to notify the MTC terminal that the base station has received the random access process initiated by the MTC terminal.

607. The MTC terminal receives the response RAR message sent by the base station, and sends a message 3 to the base station according to the response RAR message, where the message 3 carries coverage enhancement level information of the MTC terminal.

The coverage enhancement level information includes a coverage enhancement level required value of the MTC terminal; or the coverage enhancement level information includes a difference between a coverage enhancement level required value of the MTC terminal and a coverage enhancement level value corresponding to random access resources used by the MTC terminal to initiate the random access process, or a difference between a coverage enhancement level value corresponding to random access resources used by the MTC terminal to initiate the random access process and a coverage enhancement level required value of the MTC terminal.

Further, the base station receives the message 3 sent by the MTC terminal, and determines the coverage enhancement level of the MTC terminal according to the coverage enhancement level information that is of the MTC terminal and carried in the message 3.

608. The base station increases random access resources corresponding to a coverage enhancement level of the MTC terminal.

The operation of increasing, by the base station, the random access resources corresponding to the coverage enhancement level of the MTC terminal may be:
acquiring, by the base station, a seventh predefined quantity of time-frequency resources TF-resources and an eighth predefined quantity of preambles respectively from a time-frequency resource group and a preamble resource group that are in the random access resources corresponding to the another coverage enhancement level different from the coverage enhancement level of the MTC terminal; and transferring the acquired seventh predefined quantity of time-frequency resources TF-resources and the acquired eighth predefined quantity of preambles to the random access resources corresponding to the coverage enhancement level of the MTC terminal, where the seventh predefined quantity is less than or equal to a quantity of time-frequency resources TF-resources that are included in the time-frequency resource group, and the eighth predefined quantity is less than or equal to a quantity of preambles that are included in the preamble resource group.

The operation of increasing, by the base station, the random access resources corresponding to the coverage enhancement level of the MTC terminal may further be:
acquiring, by the base station, a ninth predefined quantity of time-frequency resources TF-resources and a tenth predefined quantity of preambles respectively from the time-frequency resources and the preamble resources that are in the random access resources corresponding to the another coverage enhancement level different from the coverage enhancement level of the MTC terminal; and transferring the acquired ninth predefined quantity of time-frequency resources TF-resources and the acquired tenth predefined quantity of preambles to the random access resources corresponding to the coverage enhancement level of the MTC terminal, where the ninth predefined quantity is less than or equal to a quantity of time-frequency resources TF-resources that are included in the time-frequency resources, and the tenth predefined quantity is less than or equal to a quantity of preambles that are included in the preamble resources.

The operation of increasing, by the base station, the random access resources corresponding to the coverage enhancement level of the MTC terminal may be:
acquiring, by the base station, an eleventh predefined quantity of time-frequency resources TF-resources and a twelfth predefined quantity of preambles respectively from time-frequency resources except random access resources corresponding to all coverage enhancement levels in the base station and preamble resources except the random access resources corresponding to all the coverage enhancement levels in the base station; and transferring the acquired eleventh predefined quantity of time-frequency resources TF-resources and the acquired twelfth predefined quantity of preambles to the random access resources corresponding to the coverage enhancement level of the MTC terminal, where the eleventh predefined quantity is less than or equal to a quantity of time-frequency resources TF-resources that are included in the time-frequency resources except the random access resources corresponding to all the coverage enhancement levels in the base station, and the twelfth predefined quantity is less than or equal to a quantity of preambles that are included in the preamble resources except the random access resources corresponding to all the coverage enhancement levels in the base station.

The base station may randomly select another coverage enhancement level different from the coverage enhancement level of the MTC terminal, and the base station may also determine, according to a historical record, a coverage enhancement level corresponding to sufficient random access resources.

In this example, an MTC terminal acquires predefined random access resources when random access resources corresponding to the MTC terminal are insufficient, where the predefined random access resources are random access resources corresponding to the MTC terminal, or the predefined random access resources are random access resources except random access resources corresponding to the MTC terminal; and the MTC terminal initiates a random access process by using the acquired predefined random access resources. Therefore, a probability that a conflict occurs in randomly accessing a network is reduced, and random access resource utilization is improved. Further, the MTC terminal notifies a base station that random access resources corresponding to a coverage enhancement level of the MTC terminal are insufficient, and the base station increases the random access resources corresponding to the coverage enhancement level of the MTC terminal, so as to provide a better service for the MTC terminal.

### Example 6

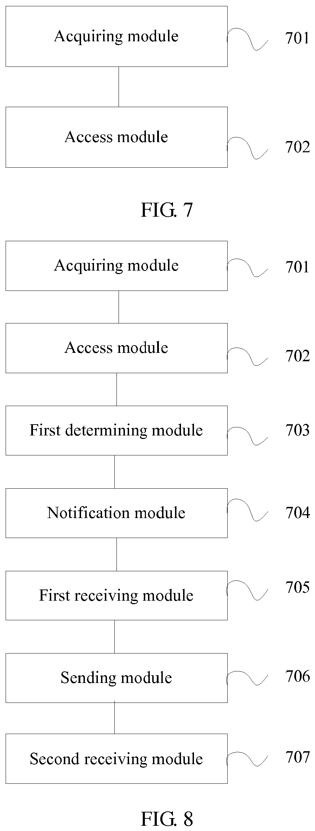

This example provides a schematic apparatus diagram of a structure of a terminal. Referring to FIG. 7, the terminal includes:
an acquiring module 701, configured to acquire predefined random access resources when random access resources corresponding to a machine type communication MTC terminal are insufficient, where the predefined random access resources are random access resources corresponding to the MTC terminal, or the predefined random access resources are random access resources except random access resources corresponding to the MTC terminal; and
an access module 702, configured to initiate a random access process by using the acquired predefined random access resources.

Further, this example provides another schematic apparatus diagram of a structure of a terminal. Referring to FIG. 8, the terminal includes an acquiring module 701 and an access module 702, and the terminal further includes:
a first determining module 703, configured to determine a coverage enhancement level of the MTC terminal, where
the acquiring module 701 is further configured to: acquire, according to the coverage enhancement level of the MTC terminal, random access resources corresponding to the coverage enhancement level of the MTC terminal; and use the random access resources corresponding to the coverage enhancement level of the MTC terminal, as the random access resources corresponding to the MTC terminal.

Further, the random access resources include a time-frequency resource and a preamble resource; and correspondingly, the acquiring module 701 is configured to acquire a time-frequency resource TF-resource in predefined time-frequency resources and a preamble that is included in a preamble resource group in the random access resources corresponding to the coverage enhancement level of the MTC terminal.

Further, the access module 702 is configured to send the acquired preamble to a base station by using the acquired predefined time-frequency resource TF-resource, so as to notify the base station that the random access resources corresponding to the coverage enhancement level of the MTC terminal are insufficient.

Further, the random access resources include a time-frequency resource and a preamble resource; and
correspondingly, the acquiring module 701 is configured to: acquire a predefined timc-frcqucncy resource TF-resource in the time-frequency resources in the random access resources corresponding to the coverage enhancement level of the MTC terminal; and acquire a predefined preamble that is included in a preamble resource group in the random access resources corresponding to the coverage enhancement level of the MTC terminal.

Further, the access module 702 is configured to send the acquired predefined preamble to a base station over the acquired predefined time-frequency resource TF-resource, so as to notify the base station that the random access resources corresponding to the coverage enhancement level of the MTC terminal are insufficient.

Further, the random access resources include a time-frequency resource and a preamble resource; and
correspondingly, the acquiring module 701 is configured to acquire a preamble in predefined preamble resources and a time-frequency resource TF-resource that is included in a time-frequency resource group in the random access resources corresponding to the coverage enhancement level of the MTC terminal.

Further, the access module 702 is configured to send the acquired preamble in the predefined preamble resources to a base station over the acquired time-frequency resource TF-resource, so as to notify the base station that the random access resources corresponding to the coverage enhancement level of the MTC terminal are insufficient.

Further, the random access resources include a time-frequency resource and a preamble resource; and
correspondingly, the acquiring module 701 is configured to: acquire a predefined preamble in the preamble resources in the random access resources corresponding to the coverage enhancement level of the MTC terminal; and
acquire a predefined time-frequency resource TF-resource that is included in a time-frequency resource group in the random access resources corresponding to the coverage enhancement level of the MTC terminal.

Further, the access module 702 is configured to send the acquired predefined preamble in the preamble resources corresponding to the MTC terminal to a base station over the acquired predefined time-frequency resource TF-resource, so as to notify the base station that the random access resources corresponding to the coverage enhancement level of the MTC terminal are insufficient.

Further, the random access resources include a time-frequency resource and a preamble resource; and
correspondingly, the acquiring module 701 is configured to acquire a predefined time-frequency resource TF-resource that is included in a time-frequency resource group in the random access resources corresponding to the coverage enhancement level of the MTC terminal, and a predefined preamble that is included in a preamble resource group in the random access resources corresponding to the coverage enhancement level of the MTC terminal.

Further, the access module 702 is configured to send the acquired predefined preamble to a base station over the acquired predefined time-frequency resource TF-resource, so as to notify the base station that the random access resources corresponding to the coverage enhancement level of the MTC terminal arc insufficient.

Further, the random access resources include a time-frequency resource and a preamble resource; and
correspondingly, the acquiring module 701 is configured to acquire a preamble except the random access resources corresponding to the coverage enhancement level of the MTC terminal, and a predefined time-frequency resource TF-resource that is included in a time-frequency resource group in the random access resources corresponding to the coverage enhancement level of the MTC terminal.

Further, the access module 702 is configured to send the acquired preamble to a base station over the acquired predefined time-frequency resource TF-resource, so as to notify the base station that the random access resources corresponding to the coverage enhancement level of the MTC terminal are insufficient.

Further, the random access resources include a time-frequency resource and a preamble resource; and
correspondingly, the acquiring module 701 is configured to: acquire a time-frequency resource TF-resource except the random access resources corresponding to the coverage enhancement level of the MTC terminal, and a predefined preamble that is included in a preamble resource group in the random access resources corresponding to the coverage enhancement level of the MTC terminal.

Further, the access module 702 is configured to send the acquired predefined preamble to a base station over the acquired time-frequency resource TF-resource, so as to notify the base station that the random access resources corresponding to the coverage enhancement level of the MTC terminal are insufficient.

Further, the random access resources include a time-frequency resource and a preamble resource; and
correspondingly, the acquiring module 701 is configured to acquire a predefined time-frequency resource TF-resource except the random access resources corresponding to the coverage enhancement level of the MTC terminal, and a predefined preamble except the random access resources corresponding to the coverage enhancement level of the MTC terminal.

Further, the access module 702 is configured to send the acquired predefined preamble to a base station over the acquired predefined time-frequency resource TF-resource, so as to notify the base station that the random access resources corresponding to the coverage enhancement level of the MTC terminal are insufficient.

Further, the acquiring module 701 is configured to: acquire another coverage enhancement level different from the coverage enhancement level of the MTC terminal; and acquire the predefined random access resources according to the acquired another coverage enhancement level different from the coverage enhancement level of the MTC terminal.

Further, the random access resources include a time-frequency resource and a preamble resource; and
correspondingly, the acquiring module 701 is configured to acquire a time-frequency resource TF-rcsourcc and a preamble that arc in random acccss resources corresponding to the another coverage enhancement level different from the coverage enhancement level of the MTC terminal.

Further, the access module 702 is configured to send the preamble in the random access resources corresponding to the another coverage enhancement level different from the coverage enhancement level of the MTC terminal, to a base station over the time-frequency resource TF-resource in the random access resources corresponding to the another coverage enhancement level different from the coverage enhancement level of the MTC terminal, so as to initiate the random access process.

Further, the random access resources include a time-frequency resource and a preamble resource; and
correspondingly, the acquiring module 701 is configured to: acquire a time-frequency resource TF-resource in random access resources corresponding to the another coverage enhancement level different from the coverage enhancement level of the MTC terminal; and acquire a preamble in the preamble resources in the random access resources corresponding to the coverage enhancement level of the MTC terminal.

Further, the access module 702 is configured to send the preamble in the preamble resources in the random access resources corresponding to the coverage enhancement level of the MTC terminal, to a base station over the time-frequency resource TF-resource in the random access resources corresponding to the another coverage enhancement level different from the coverage enhancement level of the MTC terminal, so as to initiate the random access process.

Further, the random access resources include a time-frequency resource and a preamble resource; and
correspondingly, the acquiring module is configured to: acquire a preamble resource in random access resources corresponding to the another coverage enhancement level different from the coverage enhancement level of the MTC terminal; and acquire a time-frequency resource TF-resource in the time-frequency resources in the random access resources corresponding to the coverage enhancement level of the MTC terminal.

Further, the access module 702 is configured to send the preamble resource in the random access resources corresponding to the another coverage enhancement level different from the coverage enhancement level of the MTC terminal, to a base station over the time-frequency resource TF-resource in the time-frequency resources in the random access resources corresponding to the coverage enhancement level of the MTC terminal, so as to initiate the random access process.

Further, the random access resources include a time-frequency resource and a preamble resource; and
correspondingly, the acquiring module 701 is configured to: acquire a time-frequency resource TF-resource in random access resources corresponding to the another coverage enhancement level different from the coverage enhancement level of the MTC terminal; and acquire a preamble that is included in a preamble resource group in the random access resources corresponding to the coverage enhancement level of

Further, the access module 702 is configured to send the Preamble to a base station over the acquired time-frequency resource TF-resource, so as to initiate the random access process.

Further, the terminal further includes:
a notification module 704, configured to notify the base station that the random access resources corresponding to the coverage enhancement level of the MTC terminal are insufficient.

Further, the random access resources include a time-frequency resource and a preamble resource; and
correspondingly, the access module 702 is configured to: acquire, according to the coverage enhancement level of the MTC terminal and/or the another coverage enhancement level different from the coverage enhancement level of the MTC terminal, power at which the MTC terminal sends a preamble; and send the acquired preamble to a base station over the acquired time-frequency resource TF-resource at the acquired power for sending the preamble, so as to initiate the random access process.

Further, the terminal further includes:
a first receiving module 705, configured to receive a response RAR message sent by a base station; and
a sending module 706, configured to send a random access process message 3 to the base station according to the RAR message, where the random access process message 3 carries coverage enhancement level information of the MTC terminal.

Further, the coverage enhancement level information includes a coverage enhancement level required value of the MTC terminal; or
the coverage enhancement level information includes a difference between a coverage enhancement level required value of the MTC terminal and a coverage enhancement level value corresponding to random access resources used by the MTC terminal to initiate the random access process, or a difference between a coverage enhancement level value corresponding to random access resources used by the MTC terminal to initiate the random access process and a coverage enhancement level required value of the MTC terminal.

Further, the terminal further includes:
a second receiving module 707, configured to receive configuration information sent by a base station, where the configuration information carries identifiers of the predefined random access resources.

In this example, an MTC terminal acquires predefined random access resources when random access resources corresponding to the MTC terminal are insufficient, where the predefined random access resources are random access resources corresponding to the MTC terminal, or the predefined random access resources are random access resources except random access resources corresponding to the MTC terminal; and the MTC terminal initiates a random access process by using the acquired predefined random access resources. Therefore, a probability that a conflict occurs in randomly accessing a network is reduced, and random access resource utilization is improved. Further, the MTC terminal notifies a base station that random access resources corresponding to a coverage enhancement level of the MTC terminal are insufficient, and the base station increases the random access resources corresponding to the coverage enhancement level of the MTC terminal, so as to provide a better service for the MTC terminal.

### Example 7

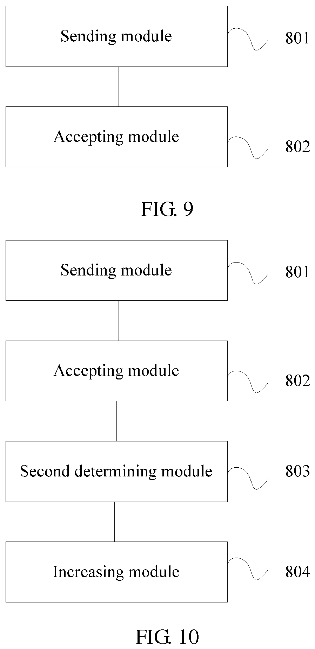

This example provides a schematic apparatus diagram of a structure of a base station. Referring to FIG. 9, the base station includes:
a sending module 801, configured to send configuration information to an MTC terminal, where the configuration information carries identifiers of predefined random access resources, so that the MTC terminal acquires the predefined random access resources according to the configuration information; and
an accepting module 802, configured to accept a random access process that is initiated by the MTC terminal by using the acquired predefined random access resources.

Further, this example provides another schematic apparatus diagram of a structure of a base station. Referring to FIG. 10, the base station includes the sending module 801 and the accepting module 802, and the apparatus further includes:
the accepting module 802 is further configured to determine, according to the random access process that is initiated by the MTC terminal over the predefined random access resources, that random access resources corresponding to the MTC terminal are insufficient.

Further, the MTC terminal is a terminal that requires coverage enhancement; and
correspondingly, the accepting module 802 is configured to determine, according to the predefined random access resources, that random access resources corresponding to a coverage enhancement level of the MTC terminal are insufficient.

Further, the MTC terminal is a terminal that requires coverage enhancement; and
correspondingly, the accepting module 802 is configured to: send a response RAR message to the MTC terminal, so that the MTC terminal sends a message 3 to the base station according to the RAR message; and receive the message 3 sent by the MTC terminal, where the message 3 carries coverage enhancement level information of the MTC terminal.

Further, the coverage enhancement level information includes a coverage enhancement level required value of the MTC terminal; or
the coverage enhancement level information includes a difference between a coverage enhancement level required value of the MTC terminal and a coverage enhancement level value corresponding to random access resources used by the MTC terminal to initiate the random access process, or a difference between a coverage enhancement level value corresponding to random access resources used by the MTC terminal to initiate the random access process and a coverage enhancement level required value of the MTC terminal.

Further, the base station further includes:
a second determining module 803, configured to determine the coverage enhancement level of the MTC terminal.

Further, the second determining module 803 is configured to determine the coverage enhancement level of the MTC terminal according to the predefined random access resources and/or the message 3.

Further, the base station further includes:
an increasing module 804, configured to increase the random access resources corresponding to the coverage enhancement level of the MTC terminal.

Further, the random access resources include a time-frequency resource and a preamble resource; and
correspondingly, the increasing module 804 is configured to: acquire a first predefined quantity of time-frequency resources TF-resources from a time-frequency resource group in random access resources corresponding to a another coverage enhancement level different from the coverage enhancement level of the MTC terminal; or acquire a second predefined quantity of time-frequency resources TF-resources from time-frequency resources in random access resources corresponding to a another coverage enhancement level different from the coverage enhancement level of the MTC terminal; or acquire a third predefined quantity of time-frequency resources TF-resources from time-frequency resources except random access resources corresponding to all coverage enhancement levels in the base station; and
transfer the acquired first predefined quantity of time-frequency resources TF-resources, or the acquired second predefined quantity of time-frequency resources TF-resources, or the acquired third predefined quantity of time-frequency resources TF-resources to the random access resources corresponding to the coverage enhancement level of the MTC terminal, where the first predefined quantity is less than or equal to a quantity of time-frequency resources TF-resources that are included in the time-frequency resource group, the second predefined quantity is less than or equal to a quantity of time-frequency resources TF-resources that are included in the time-frequency resources, and the third predefined quantity is less than or equal to a quantity of time-frequency resources TF-resources that are included in the time-frequency resources except the random access resources corresponding to all the coverage enhancement levels in the base station.

Further, the random access resources include a time-frequency resource and a preamble resource; and
correspondingly, the increasing module 804 is configured to: acquire a fourth predefined quantity of preambles from a preamble resource group in random access resources corresponding to another coverage enhancement level different from the coverage enhancement level of the MTC terminal; or acquire a fifth predefined quantity of preambles from preamble resources in random access resources corresponding to another coverage enhancement level different from the coverage enhancement level of the MTC terminal; or acquire a sixth predefined quantity of preambles from preamble resources except random access resources corresponding to all coverage enhancement levels in the base station; and
transfer the acquired fourth predefined quantity of preambles, or the acquired fifth predefined quantity of preambles, or the acquired sixth predefined quantity of preambles to the random access resources corresponding to the coverage enhancement level of the MTC terminal, where the fourth predefined quantity is less than or equal to a quantity of preambles that are included in the preamble resource group, the fifth predefined quantity is less than or equal to a quantity of preambles that are included in the preamble resources, and the sixth predefined quantity is less than or equal to a quantity of preambles that are included in the preamble resources except the random access resources corresponding to all the coverage enhancement levels in the base station.

Further, the random access resources include a time-frequency resource and a preamble resource; and
correspondingly, the increasing module 804 is configured to: acquire a seventh predefined quantity of time-frequency resources TF-resources and an eighth predefined quantity of preambles respectively from a time-frequency resource group and a preamble resource group that are in random access resources corresponding to another coverage enhancement level different from the coverage enhancement level of the MTC terminal; and transfer the acquired seventh predefined quantity of time-frequency resources TF-resources and the acquired eighth predefined quantity of preambles to the random access resources corresponding to the coverage enhancement level of the MTC terminal, where the seventh predefined quantity is less than or equal to a quantity of time-frequency resources TF-resources that are included in the time-frequency resource group, and the eighth predefined quantity is less than or equal to a quantity of preambles that are included in the preamble resource group; or
the increasing module 804 is configured to: acquire a ninth predefined quantity of time-frequency resources TF-resources and a tenth predefined quantity of preambles respectively from time-frequency resources and preamble resources that are in random access resources corresponding to another coverage enhancement level different from the coverage enhancement level of the MTC terminal; and transfer the acquired ninth predefined quantity of time-frequency resources TF-resources and the acquired tenth predefined quantity of preambles to the random access resources corresponding to the coverage enhancement level of the MTC terminal, where the ninth predefined quantity is less than or equal to a quantity of time-frequency resources TF-resources that are included in the time-frequency resources, and the tenth predefined quantity is less than or equal to a quantity of preambles that are included in the preamble resources; or
the increasing module 804 is configured to: acquire an eleventh predefined quantity of time-frequency resources TF-resources and a twelfth predefined quantity of preambles respectively from time-frequency resources except random access resources corresponding to all coverage enhancement levels in the base station and preamble resources except the random access resources corresponding to all the coverage enhancement levels in the base station; and transfer the acquired eleventh predefined quantity of time-frequency resources TF-resources and the acquired twelfth predefined quantity of preambles to the random access resources corresponding to the coverage enhancement level of the MTC terminal, where the eleventh predefined quantity is less than or equal to a quantity of time-frequency resources TF-resources that are included in the time-frequency resources except the random access resources corresponding to all the coverage enhancement levels in the base station, and the twelfth predefined quantity is less than or equal to a quantity of preambles that are included in the preamble resources except the random access resources corresponding to all the coverage enhancement levels in the base station.

Further, the accepting module 802 is configured to: receive a preamble that is included in a preamble resource group in the random access resources corresponding to the coverage enhancement level of the MTC terminal and that is sent by the MTC terminal over a time-frequency resource TF-resource in predefined time-frequency resources; and determine that the random access resources corresponding to the coverage enhancement level of the MTC terminal are insufficient.

Further, the accepting module 802 is configured to: receive a predefined preamble that is included in a preamble resource group in the random access resources corresponding to the coverage enhancement level of the MTC terminal, and that is sent by the MTC terminal over a predefined timc-frcqucncy resource TF-rcsourcc in time-frequency resources in the random acccss resources corresponding to the coverage enhancement level of the MTC terminal; and determine that the random access resources corresponding to the coverage enhancement level of the MTC terminal are insufficient.

Further, the accepting module 802 is configured to: receive a preamble that is in predefined preamble resources and is sent by the MTC terminal over a time-frequency resource TF-resource that is included in a time-frequency resource group in the random access resources corresponding to the coverage enhancement level of the MTC terminal; and determine that the random access resources corresponding to the coverage enhancement level of the MTC terminal are insufficient.

Further, the accepting module 802 is configured to: receive a predefined preamble that is in preamble resources in the random access resources corresponding to the coverage enhancement level of the MTC terminal, and that is sent by the MTC terminal over a predefined time-frequency resource TF-resource that is included in a time-frequency resource group in the random access resources corresponding to the coverage enhancement level of the MTC terminal; and determine that the random access resources corresponding to the coverage enhancement level of the MTC terminal are insufficient.

Further, the accepting module 802 is configured to: receive a predefined preamble that is included in a preamble resource group and is sent by the MTC terminal over a predefined time-frequency resource TF-resource that is included in a time-frequency resource group in the random access resources corresponding to the coverage enhancement level of the MTC terminal; and determine that the random access resources corresponding to the coverage enhancement level of the MTC terminal are insufficient.

Further, the accepting module 802 is configured to: receive a preamble, except the random access resources corresponding to the coverage enhancement level of the MTC terminal, that is sent by the MTC terminal over a predefined time-frequency resource TF-resource that is included in a time-frequency resource group in the random access resources corresponding to the coverage enhancement level of the MTC terminal; and determine that the random access resources corresponding to the coverage enhancement level of the MTC terminal are insufficient.

Further, the accepting module 802 is configured to: receive a predefined preamble that is included in a preamble resource group in the random access resources corresponding to the coverage enhancement level of the MTC terminal, and that is sent by the MTC terminal over a time-frequency resource TF-resource except the random access resources corresponding to the coverage enhancement level of the MTC terminal; and determine that the random access resources corresponding to the coverage enhancement level of the MTC terminal are insufficient.

Further, the accepting module 802 is configured to: receive a predefined preamble, except the random access resources corresponding to the coverage enhancement level of the MTC terminal, that is sent by the MTC terminal over a predefined time-frequency resource TF-resource except the random access resources corresponding to the coverage enhancement level of the MTC terminal; and determine that the random access resources corresponding to the coverage enhancement level of the MTC terminal are insufficient.

Further, the accepting module 802 is configured to: receive a preamble that is in random access resources corresponding to another coverage enhancement level different from the coverage enhancement level of the MTC terminal, and that is sent by the MTC terminal over a time-frequency resource TF-resource in the random access resources corresponding to the another coverage enhancement level different from the coverage enhancement level of the MTC terminal; and determine that the random access resources corresponding to the coverage enhancement level of the MTC terminal are insufficient.

Further, the accepting module 802 is configured to: receive a preamble resource that is in random access resources corresponding to another coverage enhancement level different from the coverage enhancement level of the MTC terminal, and that is sent by the MTC terminal over a time-frequency resource TF-resource in time-frequency resources in the random access resources corresponding to the coverage enhancement level of the MTC terminal; and determine that the random access resources corresponding to the coverage enhancement level of the MTC terminal are insufficient.

Further, the accepting module 802 is configured to: receive a preamble that is included in a preamble resource group in the random access resources corresponding to the coverage enhancement level of the MTC terminal, and that is sent by the MTC terminal over a time-frequency resource TF-resource in random access resources corresponding to another coverage enhancement level different from the coverage enhancement level of the MTC terminal; and determine that the random access resources corresponding to the coverage enhancement level of the MTC terminal are insufficient.

In this example, an MTC terminal acquires predefined random access resources when random access resources corresponding to the MTC terminal are insufficient, where the predefined random access resources are random access resources corresponding to the MTC terminal, or the predefined random access resources are random access resources except random access resources corresponding to the MTC terminal; and the MTC terminal initiates a random access process by using the acquired predefined random access resources. Therefore, a probability that a conflict occurs in randomly accessing a network is reduced, and random access resource utilization is improved. Further, the MTC terminal notifies a base station that random access resources corresponding to a coverage enhancement level of the MTC terminal are insufficient, and the base station increases the random access resources corresponding to the coverage enhancement level of the MTC terminal, so as to provide a better service for the MTC terminal.

### Example 8

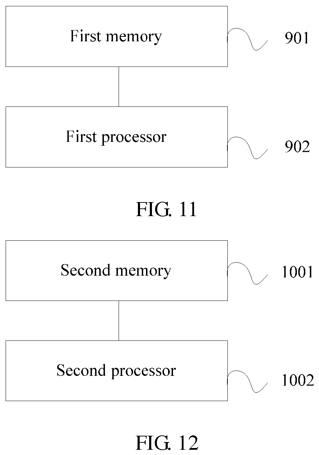

This example provides a schematic apparatus diagram of a structure of a terminal. Referring to FIG. 11, the terminal includes: a first memory 901 and a first processor 902, which are configured to execute the following method for randomly accessing a network:
acquiring, by a machine type communication MTC terminal, predefined random access resources when random access resources corresponding to the MTC terminal are insufficient, where the predefined random access resources are random access resources corresponding to the MTC terminal, or the predefined random access resources are random access resources except random access resources corresponding to the MTC terminal; and
initiating, by the MTC terminal, a random access process by using the acquired predefined random access resources.

Further, the MTC terminal is a terminal that requires coverage enhancement, and before the acquiring, by a machine type communication MTC terminal, predefined random access resources when random access resources corresponding to the MTC terminal are insufficient, the method further includes:
determining, by the MTC terminal, a coverage enhancement level of the MTC terminal;
acquiring, according to the coverage enhancement level of the MTC terminal, random access resources corresponding to the coverage enhancement level of the MTC terminal; and
using the random access resources corresponding to the coverage enhancement level of the MTC terminal, as the random access resources corresponding to the MTC terminal.

Further, the random access resources include a time-frequency resource and a preamble resource; and
correspondingly, the acquiring predefined random access resources includes:
acquiring a time-frequency resource TF-resource in predefined time-frequency resources and a preamble that is included in a preamble resource group in the random access resources corresponding to the coverage enhancement level of the MTC terminal.

Further, the initiating, by the MTC terminal, a random access process by using the acquired predefined random access resources includes:
sending, by the MTC terminal, the acquired preamble to a base station over the acquired predefined time-frequency resource TF-resource, so as to notify the base station that the random access resources corresponding to the coverage enhancement level of the MTC terminal are insufficient.

Further, the random access resources include a time-frequency resource and a preamble resource; and
correspondingly, the acquiring predefined random access resources includes:
acquiring, by the MTC terminal, a predefined time-frequency resource TF-resource in the time-frequency resources in the random access resources corresponding to the coverage enhancement level of the MTC terminal; and
acquiring a predefined preamble that is included in a preamble resource group in the random access resources corresponding to the coverage enhancement level of the MTC terminal.

Further, the initiating, by the MTC terminal, a random access process by using the acquired predefined random access resources includes:
sending, by the MTC terminal, the acquired predefined preamble to a base station over the acquired predefined time-frequency resource TF-resource, so as to notify the base station that the random access resources corresponding to the coverage enhancement level of the MTC terminal are insufficient.

Further, the random access resources include a time-frequency resource and a preamble resource; and
correspondingly, the acquiring predefined random access resources includes:
acquiring a preamble in predefined preamble resources and a time-frequency resource TF-resource that is included in a time-frequency resource group in the random access resources corresponding to the coverage enhancement level of the MTC terminal.

Further, the initiating, by the MTC terminal, a random access process by using the acquired predefined random access resources includes:
sending, by the MTC terminal, the acquired preamble in the predefined preamble resources to a base station over the acquired time-frequency resource TF-resource, so as to notify the base station that the random access resources corresponding to the coverage enhancement level of the MTC terminal are insufficient.

Further, the random access resources include a time-frequency resource and a preamble resource; and
correspondingly, the acquiring predefined random access resources includes:
acquiring a predefined preamble in the preamble resources in the random access resources corresponding to the coverage enhancement level of the MTC terminal; and
acquiring a predefined time-frequency resource TF-resource that is included in a time-frequency resource group in the random access resources corresponding to the coverage enhancement level of the MTC terminal.

Further, the initiating, by the MTC terminal, a random access process by using the acquired predefined random access resources includes:
sending, by the MTC terminal, the acquired predefined preamble in the preamble resources corresponding to the MTC terminal to a base station over the acquired predefined time-frequency resource TF-resource, so as to notify the base station that the random access resources corresponding to the coverage enhancement level of the MTC terminal are insufficient.

Further, the random access resources include a time-frequency resource and a preamble resource; and
correspondingly, the acquiring predefined random access resources includes:
acquiring a predefined time-frequency resource TF-resource that is included in a time-frequency resource group in the random access resources corresponding to the coverage enhancement level of the MTC terminal, and a predefined preamble that is included in a preamble resource group in the random access resources corresponding to the coverage enhancement level of the MTC terminal.

Further, the initiating, by the MTC terminal, a random access process by using the acquired predefined random access resources includes:
sending, by the MTC terminal, the acquired predefined preamble to a base station over the acquired predefined time-frequency resource TF-resource, so as to notify the base station that the random access resources corresponding to the coverage enhancement level of the MTC terminal are insufficient.

Further, the random access resources include a time-frequency resource and a preamble resource; and
correspondingly, the acquiring predefined random access resources includes:
acquiring a preamble except the random access resources corresponding to the coverage enhancement level of the MTC terminal, and a predefined time-frequency resource TF-resource that is included in a time-frequency resource group in the random access resources corresponding to the coverage enhancement level of the MTC terminal.

Further, the initiating, by the MTC terminal, a random access process by using the acquired predefined random access resources includes:
sending, by the MTC terminal, the acquired preamble to a base station over the acquired predefined time-frequency resource TF-resource, so as to notify the base station that the random access resources corresponding to the coverage enhancement level of the MTC terminal are insufficient.

Further, the random access resources include a time-frequency resource and a preamble resource; and
correspondingly, the acquiring predefined random access resources includes:
acquiring a time-frequency resource TF-resource except the random access resources corresponding to the coverage enhancement level of the MTC terminal, and a predefined preamble that is included in a preamble resource group in the random access resources corresponding to the coverage enhancement level of the MTC terminal.

Further, the initiating, by the MTC terminal, a random access process by using the acquired predefined random access resources includes:
sending, by the MTC terminal, the acquired predefined preamble to a base station over the acquired time-frequency resource TF-resource, so as to notify the base station that the random access resources corresponding to the coverage enhancement level of the MTC terminal are insufficient.

Further, the random access resources include a time-frequency resource and a preamble resource; and
correspondingly, the acquiring predefined random access resources includes:
acquiring a predefined time-frequency resource TF-resource except the random access resources corresponding to the coverage enhancement level of the MTC terminal, and a predefined preamble except the random access resources corresponding to the coverage enhancement level of the MTC terminal.

Further, the initiating, by the MTC terminal, a random access process by using the acquired predefined random access resources includes:
sending, by the MTC terminal, the acquired predefined preamble to a base station over the acquired predefined time-frequency resource TF-resource, so as to notify the base station that the random access resources corresponding to the coverage enhancement level of the MTC terminal are insufficient.

Further, the acquiring predefined random access resources includes:
acquiring, by the MTC terminal, another coverage enhancement level different from the coverage enhancement level of the MTC terminal; and
acquiring the predefined random access resources according to the acquired another coverage enhancement level different from the coverage enhancement level of the MTC terminal.

Further, the random access resources include a time-frequency resource and a preamble resource; and
correspondingly, the acquiring the predefined random access resources according to the acquired another coverage enhancement level different from the coverage enhancement level of the MTC terminal includes:
acquiring, by the MTC terminal, a time-frequency resource TF-resource and a preamble that are in random access resources corresponding to the another coverage enhancement level different from the coverage enhancement level of the MTC terminal.

Further, the initiating, by the MTC terminal, a random access process by using the acquired predefined random access resources includes:
sending, by the MTC terminal, the preamble in the random access resources corresponding to the another coverage enhancement level different from the coverage enhancement level of the MTC terminal, to a base station over the time-frequency resource TF-resource in the random access resources corresponding to the another coverage enhancement level different from the coverage enhancement level of the MTC terminal, so as to initiate the random access process.

Further, the random access resources include a time-frequency resource and a preamble resource; and
correspondingly, the acquiring the predefined random access resources according to the another coverage enhancement level different from the coverage enhancement level of the MTC terminal includes:
acquiring, by the MTC terminal, a time-frequency resource TF-resource in random access resources corresponding to the another coverage enhancement level different from the coverage enhancement level of the MTC terminal; and
acquiring, by the MTC terminal, a preamble in the preamble resources in the random access resources corresponding to the coverage enhancement level of the MTC terminal.

Further, the initiating, by the MTC terminal, a random access process by using the acquired predefined random access resources includes:
sending the preamble in the preamble resources in the random access resources corresponding to the coverage enhancement level of the MTC terminal, to a base station over the time-frequency resource TF-resource in the random access resources corresponding to the another coverage enhancement level different from the coverage enhancement level of the MTC terminal, so as to initiate the random access process.

Further, the random access resources include a time-frequency resource and a preamble resource; and
correspondingly, the acquiring the predefined random access resources according to the another coverage enhancement level different from the coverage enhancement level of the MTC terminal includes:
acquiring, by the MTC terminal, a preamble resource in random access resources corresponding to the another coverage enhancement level different from the coverage enhancement level of the MTC terminal; and
acquiring, by the MTC terminal, a time-frequency resource TF-resource in the time-frequency resources in the random access resources corresponding to the coverage enhancement level of the MTC terminal.

Further, the initiating, by the MTC terminal, a random access process by using the acquired predefined random access resources includes:
sending the preamble resource in the random access resources corresponding to the another coverage enhancement level different from the coverage enhancement level of the MTC terminal, to a base station over the time-frequency resource TF-resource in the time-frequency resources in the random access resources corresponding to the coverage enhancement level of the MTC terminal, so as to initiate the random access process.

Further, the random access resources include a time-frequency resource and a preamble resource; and
correspondingly, the acquiring the predefined random access resources according to the another coverage enhancement level different from the coverage enhancement level of the MTC terminal includes:
acquiring, by the MTC terminal, a time-frequency resource TF-resource in random access resources corresponding to the another coverage enhancement level different from the coverage enhancement level of the MTC terminal; and
acquiring, by the MTC terminal, a preamble that is included in a preamble resource group in the random access resources corresponding to the coverage enhancement level of the MTC terminal.

Further, the initiating, by the MTC terminal, a random access process by using the acquired predefined random access resources includes:
sending the Preamble to a base station over the acquired time-frequency resource TF-resource, so as to initiate the random access process.

Further, the method further includes:
notifying the base station that the random access resources corresponding to the coverage enhancement level of the MTC terminal are insufficient.

Further, the random access resources include a time-frequency resource and a preamble resource; and
correspondingly, the initiating, by the MTC terminal, a random access process by using the acquired predefined random access resources includes:
acquiring, by the MTC terminal according to the coverage enhancement level of the MTC terminal and/or the another coverage enhancement level different from the coverage enhancement level of the MTC terminal, power at which the MTC terminal sends a preamble; and
sending the acquired preamble to a base station over the acquired time-frequency resource TF-resource at the acquired power for sending the preamble, so as to initiate the random access process.

Further, after the initiating, by the MTC terminal, a random access process by using the acquired predefined random access resources, the method further includes:
receiving, by the MTC terminal, a response RAR message sent by a base station; and
sending a random access process message 3 to the base station according to the RAR message, where the random access process message 3 carries coverage enhancement level information of the MTC terminal.

Further, the coverage enhancement level information includes a coverage enhancement level required value of the MTC terminal; or
the coverage enhancement level information includes a difference between a coverage enhancement level required value of the MTC terminal and a coverage enhancement level value corresponding to random access resources used by the MTC terminal to initiate the random access process, or a difference between a coverage enhancement level value corresponding to random access resources used by the MTC terminal to initiate the random access process and a coverage enhancement level required value of the MTC terminal.

Further, before the acquiring, by the MTC terminal, the predefined random access resources, the method further includes:
receiving configuration information sent by a base station, where the configuration information carries identifiers of the predefined random access resources.

In this example, an MTC terminal acquires predefined random access resources when random access resources corresponding to the MTC terminal are insufficient, where the predefined random access resources are random access resources corresponding to the MTC terminal, or the predefined random access resources are random access resources except random access resources corresponding to the MTC terminal; and the MTC terminal initiates a random access process by using the acquired predefined random access resources. Therefore, a probability that a conflict occurs in randomly accessing a network is reduced, and random access resource utilization is improved. Further, the MTC terminal notifies a base station that random access resources corresponding to a coverage enhancement level of the MTC terminal are insufficient, and the base station increases the random access resources corresponding to the coverage enhancement level of the MTC terminal, so as to provide a better service for the MTC terminal.

### Example 9

This example provides a schematic apparatus diagram of a structure of a base station. Referring to FIG. 12, the base station includes: a second memory 1001 and a second processor 1002, which are configured to execute the following method for randomly accessing a network:
sending, by the base station, configuration information to an MTC terminal, where the configuration information carries identifiers of predefined random access resources, so that the MTC terminal acquires the predefined random access resources according to the configuration information; and
accepting, by the base station, a random access process that is initiated by the MTC terminal by using the acquired predefined random access resources.

Further, the accepting, by the base station, a random access process that is initiated by the MTC terminal by using the acquired predefined random access resources includes:
determining, by the base station according to the random access process that is initiated by the MTC terminal over the predefined random access resources, that random access resources corresponding to the MTC terminal are insufficient.

Further, the MTC terminal is a terminal that requires coverage enhancement; and correspondingly, the determining, by the base station according to the random access process that is initiated by the MTC terminal over the predefined random access resources, that random access resources corresponding to the MTC terminal are insufficient includes:
determining, by the base station according to the predefined random access resources, that random access resources corresponding to a coverage enhancement level of the MTC terminal are insufficient.

Further, the MTC terminal is a terminal that requires coverage enhancement; and correspondingly, the accepting, by the base station, a random access process that is initiated by the MTC terminal by using the acquired predefined random access resources includes:
sending, by the base station, a response RAR message to the MTC terminal, so that the MTC terminal sends a message 3 to the base station according to the RAR message; and
receiving the message 3 sent by the MTC terminal, where the message 3 carries coverage enhancement level information of the MTC terminal.

Further, the coverage enhancement level information includes a coverage enhancement level required value of the MTC terminal; or
the coverage enhancement level information includes a difference between a coverage enhancement level required value of the MTC terminal and a coverage enhancement level value corresponding to random access resources used by the MTC terminal to initiate the random access process, or a difference between a coverage enhancement level value corresponding to random access resources used by the MTC terminal to initiate the random access process and a coverage enhancement level required value of the MTC terminal.

Further, the method further includes:
determining, by the base station, the coverage enhancement level of the MTC terminal.

Further, the determining, by the base station, the coverage enhancement level of the MTC terminal includes:
determining, by the base station according to the predefined random access resources and/or the message 3, the coverage enhancement level of the MTC terminal.

Further, after the determining, by the base station according to the predefined random access resources, that the random access resources corresponding to the coverage enhancement level of the MTC terminal are insufficient, and determining the coverage enhancement level of the MTC terminal, the method further includes:
increasing, by the base station, the random access resources corresponding to the coverage enhancement level of the MTC terminal.

Further, the random access resources include a time-frequency resource and a preamble resource; and
correspondingly, the increasing, by the base station, the random access resources corresponding to the coverage enhancement level of the MTC terminal includes:
acquiring a first predefined quantity of time-frequency resources TF-resources from a time-frequency resource group in random access resources corresponding to another coverage enhancement level different from the coverage enhancement level of the MTC terminal; or acquiring a second predefined quantity of time-frequency resources TF-resources from time-frequency resources in random access resources corresponding to another coverage enhancement level different from the coverage enhancement level of the MTC terminal; or acquiring a third predefined quantity of time-frequency resources TF-resources from time-frequency resources except random access resources corresponding to all coverage enhancement levels in the base station; and
transferring the acquired first predefined quantity of time-frequency resources TF-resources, or the acquired second predefined quantity of time-frequency resources TF-resources, or the acquired third predefined quantity of time-frequency resources TF-resources to the random access resources corresponding to the coverage enhancement level of the MTC terminal, where the first predefined quantity is less than or equal to a quantity of time-frequency resources TF-resources that are included in the time-frequency resource group, the second predefined quantity is less than or equal to a quantity of time-frequency resources TF-resources that are included in the time-frequency resources, and the third predefined quantity is less than or equal to a quantity of time-frequency resources TF-resources that are included in the time-frequency resources except the random access resources corresponding to all the coverage enhancement levels in the base station.

Further, the random access resources include a time-frequency resource and a preamble resource; and
correspondingly, the increasing, by the base station, the random access resources corresponding to the coverage enhancement level of the MTC terminal includes:
acquiring a fourth predefined quantity of preambles from a preamble resource group in random access resources corresponding to another coverage enhancement level different from the coverage enhancement level of the MTC terminal; or acquiring a fifth predefined quantity of preambles from preamble resources in random access resources corresponding to another coverage enhancement level different from the coverage enhancement level of the MTC terminal; or acquiring a sixth predefined quantity of preambles from preamble resources except random access resources corresponding to all coverage enhancement levels in the base station; and
transferring the acquired fourth predefined quantity of preambles, or the acquired fifth predefined quantity of preambles, or the acquired sixth predefined quantity of preambles to the random access resources corresponding to the coverage enhancement level of the MTC terminal, where the fourth predefined quantity is less than or equal to a quantity of preambles that are included in the preamble resource group, the fifth predefined quantity is less than or equal to a quantity of preambles that are included in the preamble resources, and the sixth predefined quantity is less than or equal to a quantity of preambles that are included in the preamble resources except the random access resources corresponding to all the coverage enhancement levels in the base station.

Further, the random access resources include a time-frequency resource and a preamble resource; and
correspondingly, the increasing, by the base station, the random access resources corresponding to the coverage enhancement level of the MTC terminal includes:
acquiring a seventh predefined quantity of time-frequency resources TF-resources and an eighth predefined quantity of preambles respectively from a time-frequency resource group and a preamble resource group that are in random access resources corresponding to another coverage enhancement level different from the coverage enhancement level of the MTC terminal; and transferring the acquired seventh predefined quantity of time-frequency resources TF-resources and the acquired eighth predefined quantity of preambles to the random access resources corresponding to the coverage enhancement level of the MTC terminal, where the seventh predefined quantity is less than or equal to a quantity of time-frequency resources TF-resources that are included in the time-frequency resource group, and the eighth predefined quantity is less than or equal to a quantity of preambles that are included in the preamble resource group; or
acquiring a ninth predefined quantity of time-frequency resources TF-resources and a tenth predefined quantity of preambles respectively from time-frequency resources and preamble resources that are in random access resources corresponding to another coverage enhancement level different from the coverage enhancement level of the MTC terminal; and transferring the acquired ninth predefined quantity of time-frequency resources TF-resources and the acquired tenth predefined quantity of preambles to the random access resources corresponding to the coverage enhancement level of the MTC terminal, where the ninth predefined quantity is less than or equal to a quantity of time-frequency resources TF-resources that are included in the time-frequency resources, and the tenth predefined quantity is less than or equal to a quantity of preambles that are included in the preamble resources; or
acquiring an eleventh predefined quantity of time-frequency resources TF-resources and a twelfth predefined quantity of preambles respectively from time-frequency resources except random access resources corresponding to all coverage enhancement levels in the base station and preamble resources except the random access resources corresponding to all the coverage enhancement levels in the base station; and transferring the acquired eleventh predefined quantity of time-frequency resources TF-resources and the acquired twelfth predefined quantity of preambles to the random access resources corresponding to the coverage enhancement level of the MTC terminal, where the eleventh predefined quantity is less than or equal to a quantity of time-frequency resources TF-resources that are included in the time-frequency resources except the random access resources corresponding to all the coverage enhancement levels in the base station, and the twelfth predefined quantity is less than or equal to a quantity of preambles that are included in the preamble resources except the random access resources corresponding to all the coverage enhancement levels in the base station.

Further, the determining, by the base station according to the predefined random access resources, that the random access resources corresponding to the coverage enhancement level of the MTC terminal are insufficient includes:
receiving, by the base station, a preamble that is included in a preamble resource group in the random access resources corresponding to the coverage enhancement level of the MTC terminal and that is sent by the MTC terminal over a time-frequency resource TF-resource in predefined time-frequency resources; and determining that the random access resources corresponding to the coverage enhancement level of the MTC terminal are insufficient.

Further, the determining, by the base station according to the predefined random access resources, that the random access resources corresponding to the coverage enhancement level of the MTC terminal are insufficient includes:
receiving, by the base station, a predefined preamble that is included in a preamble resource group in the random access resources corresponding to the coverage enhancement level of the MTC terminal, and that is sent by the MTC terminal over a predefined time-frequency resource TF-resource in time-frequency resources in the random access resources corresponding to the coverage enhancement level of the MTC terminal; and determining that the random access resources corresponding to the coverage enhancement level of the MTC terminal are insufficient.

Further, the determining, by the base station according to the predefined random access resources, that the random access resources corresponding to the coverage enhancement level of the MTC terminal are insufficient includes:
receiving, by the base station, a preamble that is in predefined preamble resources and is sent by the MTC terminal over a time-frequency resource TF-resource that is included in a time-frequency resource group in the random access resources corresponding to the coverage enhancement level of the MTC terminal; and determining that the random access resources corresponding to the coverage enhancement level of the MTC terminal are insufficient.

Further, the determining, by the base station according to the predefined random access resources, that the random access resources corresponding to the coverage enhancement level of the MTC terminal are insufficient includes:
receiving, by the base station, a predefined preamble that is in preamble resources in the random access resources corresponding to the coverage enhancement level of the MTC terminal, and that is sent by the MTC terminal over a predefined time-frequency resource TF-resource that is included in a time-frequency resource group in the random access resources corresponding to the coverage enhancement level of the MTC terminal; and determining that the random access resources corresponding to the coverage enhancement level of the MTC terminal are insufficient.

Further, the determining, by the base station according to the predefined random access resources, that the random access resources corresponding to the coverage enhancement level of the MTC terminal are insufficient includes:
receiving, by the base station, a predefined preamble that is included in a preamble resource group and is sent by the MTC terminal over a predefined time-frequency resource TF-resource that is included in a time-frequency resource group in the random access resources corresponding to the coverage enhancement level of the MTC terminal; and determining that the random access resources corresponding to the coverage enhancement level of the MTC terminal are insufficient.

Further, the determining, by the base station according to the predefined random access resources, that the random access resources corresponding to the coverage enhancement level of the MTC terminal are insufficient includes:
receiving, by the base station, a preamble, except the random access resources corresponding to the coverage enhancement level of the MTC terminal, that is sent by the MTC terminal over a predefined time-frequency resource TF-resource that is included in a time-frequency resource group in the random access resources corresponding to the coverage enhancement level of the MTC terminal; and determining that the random access resources corresponding to the coverage enhancement level of the MTC terminal are insufficient.

Further, the determining, by the base station according to the predefined random access resources, that the random access resources corresponding to the coverage enhancement level of the MTC terminal are insufficient includes:
receiving, by the base station, a predefined preamble that is included in a preamble resource group in the random access resources corresponding to the coverage enhancement level of the MTC terminal, and that is sent by the MTC terminal over a time-frequency resource TF-resource except the random access resources corresponding to the coverage enhancement level of the MTC terminal; and determining that the random access resources corresponding to the coverage enhancement level of the MTC terminal are insufficient.

Further, the determining, by the base station according to the predefined random access resources, that the random access resources corresponding to the coverage enhancement level of the MTC terminal are insufficient includes:
receiving, by the base station, a predefined preamble, except the random access resources corresponding to the coverage enhancement level of the MTC terminal, that is sent by the MTC terminal over a predefined time-frequency resource TF-resource except the random access resources corresponding to the coverage enhancement level of the MTC terminal; and determining that the random access resources corresponding to the coverage enhancement level of the MTC terminal are insufficient.

Further, the determining, by the base station according to the predefined random access resources, that the random access resources corresponding to the coverage enhancement level of the MTC terminal are insufficient includes:
receiving, by the base station, a preamble that is in random access resources corresponding to another coverage enhancement level different from the coverage enhancement level of the MTC terminal, and that is sent by the MTC terminal over a time-frequency resource TF-resource in the random access resources corresponding to the another coverage enhancement level different from the coverage enhancement level of the MTC terminal; and determining that the random access resources corresponding to the coverage enhancement level of the MTC terminal are insufficient.

Further, the determining, by the base station according to the predefined random access resources, that the random access resources corresponding to the coverage enhancement level of the MTC terminal are insufficient includes:
receiving, by the base station, a preamble resource that is in random access resources corresponding to another coverage enhancement level different from the coverage enhancement level of the MTC terminal, and that is sent by the MTC terminal over a time-frequency resource TF-resource in time-frequency resources in the random access resources corresponding to the coverage enhancement level of the MTC terminal; and determining that the random access resources corresponding to the coverage enhancement level of the MTC terminal are insufficient.

Further, the determining, by the base station according to the predefined random access resources, that the random access resources corresponding to the coverage enhancement level of the MTC terminal are insufficient includes:
receiving, by the base station, a preamble that is included in a preamble resource group in the random access resources corresponding to the coverage enhancement level of the MTC terminal, and that is sent by the MTC terminal over a time-frequency resource TF-resource in random access resources corresponding to another coverage enhancement level different from the coverage enhancement level of the MTC terminal; and determining that the random access resources corresponding to the coverage enhancement level of the MTC terminal are insufficient.

In this example, an MTC terminal acquires predefined random access resources when random access resources corresponding to the MTC terminal are insufficient, where the predefined random access resources are random access resources corresponding to the MTC terminal, or the predefined random access resources are random access resources except random access resources corresponding to the MTC terminal; and the MTC terminal initiates a random access process by using the acquired predefined random access resources. Therefore, a probability that a conflict occurs in randomly accessing a network is reduced, and random access resource utilization is improved. Further, the MTC terminal notifies a base station that random access resources corresponding to a coverage enhancement level of the MTC terminal are insufficient, and the base station increases the random access resources corresponding to the coverage enhancement level of the MTC terminal, so as to provide a better service for the MTC terminal.

It should be noted that, when the terminal provided in the foregoing examples randomly accesses a network, division of the foregoing functional modules is used as an example for description. In actual application, the foregoing functions can be allocated to different functional modules and implemented according to a requirement, that is, an inner structure of the terminal is divided into different functional modules to implement all or some of the functions described above. In addition, the terminal provided in the foregoing examples pertains to a same concept as the examples of the method for randomly accessing a network. For a specific implementation process of the terminal, reference may be made to the method examples, and details are not described herein again.

A person of ordinary skill in the art may understand that all or some of the steps of the examples may be implemented by hardware or a program instructing related hardware. The program may be stored in a computer-readable storage medium. The storage medium may include: a read-only memory, a magnetic disk, an optical disc, or the like.

The foregoing descriptions are merely examples of the present invention, but are not intended to limit the present invention.

## Claims

1. A method for randomly accessing a network, wherein the method comprises:
determining, by a machine type communication, MTC terminal that requires coverage enhancement, a coverage enhancement level of the MTC terminal;
acquiring, by the MTC terminal, according to the coverage enhancement level of the MTC terminal, random access resources corresponding to the coverage enhancement level of the MTC terminal; and
initiating by the MTC terminal, a random access process by the MTC terminal, by using the random access resources corresponding to the coverage enhancement level of the MTC terminal, as the random access resources corresponding to the MTC terminal;
acquiring, by the MTC terminal, another coverage enhancement level different from the coverage enhancement level of the MTC terminal when the MTC terminal fails to access a network after initiating the random access process for a predefined quantity of times;
acquiring (101), by the MTC terminal, predefined random access resources according to the another coverage enhancement level different from the coverage enhancement level of the MTC terminal, wherein the predefined random access resources include a time-frequency resource and a preamble resource; and
initiating (102), by the MTC terminal, a random access process by using the acquired predefined random access resources, said initiating comprising:
acquiring, by the MTC terminal according to the another coverage enhancement level different from the coverage enhancement level of the MTC terminal, power at which the MTC terminal sends a preamble; and
sending the acquired preamble to a base station over the acquired time-frequency resource at the acquired power for sending the preamble.

2. The method according to claim 1, wherein after the sending the acquired preamble to a base station, the method further comprises:
receiving, by the MTC terminal, a response RAR message from the base station; and
sending a random access process message 3 to the base station according to the RAR message, wherein the random access process message 3 carries coverage enhancement level information of the MTC terminal.

3. The method according to claim 1, wherein before the acquiring, by an MTC terminal, predefined random access resources, the method further comprises:
receiving configuration information from the base station, wherein the configuration information carries identifiers of the predefined random access resources.

4. A terminal, wherein the terminal comprises:
a first determining module (703), configured to determine a coverage enhancement level of a MTC terminal that requires coverage enhancement;
an acquiring module (701), configured to acquire according to the coverage enhancement level of the MTC terminal, random access resources corresponding to the coverage enhancement level of the MTC terminal; and
an access module (702), configured to initiate a random access process by the MTC terminal by using the random access resources corresponding to the coverage enhancement level of the MTC terminal, as the random access resources corresponding to the MTC terminal;
the acquiring module (701), configured to acquire another coverage enhancement level different from the coverage enhancement level of the MTC terminal when the MTC terminal fails to access a network after initiating the random access process for a predefined quantity of times;
acquire predefined random access resources according to the another coverage enhancement level different from the coverage enhancement level of the MTC terminal, wherein the predefined random access resources include a time-frequency resource and a preamble resource; and
the access module (702), configured to initiate a random access process by using the acquired predefined random access resources, said initiating comprising:
acquire, according to the another coverage enhancement level different from the coverage enhancement level of the MTC terminal, power at which the MTC terminal sends a preamble; and
send the acquired preamble to a base station over the acquired time-frequency resource at the acquired power for sending the preamble.

5. The terminal according to claim 4, wherein the terminal further comprises:
a first receiving module (705), configured to receive a response RAR message from the base station; and
a sending module (706), configured to send a random access process message 3 to the base station according to the RAR message, wherein the random access process message 3 carries coverage enhancement level information of the MTC terminal.

6. The terminal according to claim 4, wherein the terminal further comprises:
a second receiving module (707), configured to receive configuration information from the base station, wherein the configuration information carries identifiers of the predefined random access resources.

7. A computer readable storage medium storing program, when excuted by a computer, causes the computer to carry out the method according to any one of 1 to 3.

## Patentansprüche

1. Verfahren zum Erstzugriff auf ein Netz, wobei das Verfahren Folgendes umfasst:
Bestimmen, durch ein Maschinenkommunikations-Endgerät bzw. MTC-Endgerät, das Abdeckungserweiterung benötigt, eines Abdeckungserweiterungsniveaus des MTC-Endgeräts;
Erfassen, durch das MTC-Endgerät, gemäß dem Abdeckungserweiterungsniveau des MTC-Endgeräts, von Erstzugriffsressourcen, die dem Abdeckungserweiterungsniveau des MTC-Endgeräts entsprechen; und
Initiieren, durch das MTC-Endgerät, eines Erstzugriffsprozesses durch das MTC-Endgerät, unter Verwendung der dem Abdeckungserweiterungsniveau des MTC-Endgeräts entsprechenden Erstzugriffsressourcen als die dem MTC-Endgerät entsprechenden Erstzugriffsressourcen;
Erfassen, durch das MTC-Endgerät, eines anderen Abdeckungserweiterungsniveaus, das sich von dem Abdeckungserweiterungsniveau des MTC-Endgeräts unterscheidet, wenn Zugriff durch das MTC-Endgerät auf ein Netz fehlschlägt, nachdem der Erstzugriffsprozess für eine vordefinierte Anzahl von Malen initiiert wurde;
Erfassen (101), durch das MTC-Endgerät, von vordefinierten Erstzugriffsressourcen gemäß dem anderen Abdeckungserweiterungsniveau, das sich von dem Abdeckungserweiterungsniveau des MTC-Endgeräts unterscheidet, wobei die vordefinierten Erstzugriffsressourcen eine Zeit-Frequenz-Ressource und eine Präambelressource beinhalten; und
Initiieren (102), durch das MTC-Endgerät, eines Erstzugriffsprozesses unter Verwendung der erfassten vordefinierten Erstzugriffsressourcen, wobei das Initiieren Folgendes umfasst:
Erfassen, durch das MTC-Endgerät gemäß dem anderen Abdeckungserweiterungsniveau, das sich von dem Abdeckungserweiterungsniveau des MTC-Endgeräts unterscheidet, einer Leistung, mit der das MTC-Endgerät eine Präambel sendet; und
Senden der erfassten Präambel an eine Basisstation über die erfasste Zeit-Frequenz-Ressource mit der erfassten Leistung zum Senden der Präambel.

2. Verfahren nach Anspruch 1, wobei das Verfahren nach dem Senden der erfassten Präambel an eine Basisstation ferner Folgendes umfasst:
Empfangen, durch das MTC-Endgerät, einer Antwort-RAR-Nachricht von der Basisstation; und
Senden einer Erstzugriffsprozessnachricht 3 an die Basisstation gemäß der RAR-Nachricht, wobei die Erstzugriffsprozessnachricht 3 Abdeckungserweiterungsniveauinformationen des MTC-Endgeräts führt.

3. Verfahren nach Anspruch 1, wobei das Verfahren vor dem Erfassen, durch ein MTC-Endgerät, von vordefinierten Erstzugriffsressourcen ferner Folgendes umfasst:
Empfangen von Konfigurationsinformationen von der Basisstation, wobei die Konfigurationsinformationen Kennungen der vordefinierten Erstzugriffsressourcen führen.

4. Endgerät, wobei das Endgerät Folgendes umfasst:
ein erstes Bestimmungsmodul (703), ausgelegt zum Bestimmen eines Abdeckungserweiterungsniveaus eines MTC-Endgeräts, das Abdeckungserweiterung benötigt;
ein Erfassungsmodul (701), ausgelegt zum Erfassen gemäß dem Abdeckungserweiterungsniveau des MTC-Endgeräts, von Erstzugriffsressourcen, die dem Abdeckungserweiterungsniveau des MTC-Endgeräts entsprechen; und
ein Zugriffsmodul (702), ausgelegt zum Initiieren eines Erstzugriffsprozesses durch das MTC-Endgerät unter Verwendung der dem Abdeckungserweiterungsniveau des MTC-Endgeräts entsprechenden Erstzugriffsressourcen als die dem MTC-Endgerät entsprechenden Erstzugriffsressourcen;
wobei das Erfassungsmodul (701) ausgelegt ist zum Erfassen eines anderen Abdeckungserweiterungsniveaus, das sich von dem Abdeckungserweiterungsniveau des MTC-Endgeräts unterscheidet, wenn Zugriff durch das MTC-Endgerät auf ein Netz fehlschlägt, nachdem der Erstzugriffsprozess für eine vordefinierte Anzahl von Malen initiiert wurde;
Erfassen von vordefinierten Erstzugriffsressourcen gemäß dem anderen Abdeckungserweiterungsniveau, das sich von dem Abdeckungserweiterungsniveau des MTC-Endgeräts unterscheidet, wobei die vordefinierten Erstzugriffsressourcen eine Zeit-Frequenz-Ressource und eine Präambelressource beinhalten; und
wobei das Zugriffsmodul (702) ausgelegt ist zum Initiieren eines Erstzugriffsprozesses unter Verwendung der erfassten vordefinierten Erstzugriffsressourcen, wobei das Initiieren Folgendes umfasst:
Erfassen, gemäß dem anderen Abdeckungserweiterungsniveau, das sich von dem Abdeckungserweiterungsniveau des MTC-Endgeräts unterscheidet, einer Leistung, mit der das MTC-Endgerät eine Präambel sendet; und
Senden der erfassten Präambel an eine Basisstation über die erfasste Zeit-Frequenz-Ressource mit der erfassten Leistung zum Senden der Präambel.

5. Endgerät nach Anspruch 4, wobei das Endgerät ferner Folgendes umfasst:
ein erstes Empfangsmodul (705), ausgelegt zum Empfangen einer Antwort-RAR-Nachricht von der Basisstation; und
ein Sendemodul (706), ausgelegt zum Senden einer Erstzugriffsprozessnachricht 3 an die Basisstation gemäß der RAR-Nachricht, wobei die Erstzugriffsprozessnachricht 3 Abdeckungserweiterungsniveauinformationen des MTC-Endgeräts führt.

6. Endgerät nach Anspruch 4, wobei das Endgerät ferner Folgendes umfasst:
ein zweites Empfangsmodul (707), ausgelegt zum Empfangen von Konfigurationsinformationen von der Basisstation, wobei die Konfigurationsinformationen Kennungen der vordefinierten Erstzugriffsressourcen führen.

7. Computerlesbares Speicherungsmedium, das ein Programm speichert, das bei Ausführung durch einen Computer den Computer zum Ausführen des Verfahrens nach einem der Ansprüche 1 bis 3 veranlasst.

## Revendications

1. Procédé d'accès aléatoire à un réseau, le procédé comportant :
la détermination, par un terminal de communication de type machine, MTC, qui nécessite une amélioration de couverture, d'un niveau d'amélioration de couverture du terminal de MTC ;
l'acquisition, par le terminal de MTC, selon le niveau d'amélioration de couverture du terminal de MTC, de ressources à accès aléatoire correspondant au niveau d'amélioration de couverture du terminal de MTC ; et
le lancement, par le terminal de MTC, d'un processus d'accès aléatoire par le terminal de MTC, en utilisant les ressources à accès aléatoire correspondant au niveau d'amélioration de couverture du terminal de MTC, en tant que ressources à accès aléatoire correspondant au terminal de MTC ;
l'acquisition, par le terminal de MTC, d'un autre niveau d'amélioration de couverture différent du niveau d'amélioration de couverture du terminal de MTC lorsque le terminal de MTC échoue dans l'accès à un réseau après avoir lancé le processus d'accès aléatoire une quantité prédéfinie de fois ;
l'acquisition (101), par le terminal de MTC, de ressources prédéfinies à accès aléatoire selon l'autre niveau d'amélioration de couverture différent du niveau d'amélioration de couverture du terminal de MTC, les ressources prédéfinies à accès aléatoire comprenant une ressource temps-fréquence et une ressource de préambule ; et
le lancement (102), par le terminal de MTC, d'un processus d'accès aléatoire en utilisant les ressources prédéfinies à accès aléatoire acquises, ledit lancement comportant :
l'acquisition, par le terminal de MTC selon l'autre niveau d'amélioration de couverture différent du niveau d'amélioration de couverture du terminal de MTC, de la puissance à laquelle le terminal de MTC envoie un préambule ; et
l'envoi du préambule acquis à une station de base sur la ressource temps-fréquence acquise, à la puissance acquise pour envoyer le préambule.

2. Procédé selon la revendication 1, le procédé comportant en outre, après l'envoi du préambule acquis à une station de base :
la réception, par le terminal de MTC, d'un message RAR de réponse en provenance de la station de base ; et
l'envoi d'un message 3 de processus d'accès aléatoire à la station de base selon le message RAR, le message 3 de processus d'accès aléatoire transportant des informations de niveau d'amélioration de couverture du terminal de MTC.

3. Procédé selon la revendication 1, le procédé comportant en outre, avant l'acquisition, par un terminal de MTC, de ressources prédéfinies à accès aléatoire :
la réception d'informations de configuration en provenance de la station de base, les informations de configuration transportant des identifiants des ressources prédéfinies à accès aléatoire.

4. Terminal, le terminal comportant :
un premier module (703) de détermination, configuré pour déterminer un niveau d'amélioration de couverture d'un terminal de MTC qui nécessite une amélioration de couverture ;
un module (701) d'acquisition, configuré pour acquérir, selon le niveau d'amélioration de couverture du terminal de MTC, des ressources à accès aléatoire correspondant au niveau d'amélioration de couverture du terminal de MTC ; et
un module (702) d'accès, configuré pour lancer un processus d'accès aléatoire par le terminal de MTC en utilisant les ressources à accès aléatoire correspondant au niveau d'amélioration de couverture du terminal de MTC, en tant que ressources à accès aléatoire correspondant au terminal de MTC ;
le module (701) d'acquisition, configuré pour
acquérir un autre niveau d'amélioration de couverture différent du niveau d'amélioration de couverture du terminal de MTC lorsque le terminal de MTC échoue dans l'accès à un réseau après avoir lancé le processus d'accès aléatoire une quantité prédéfinie de fois ;
acquérir des ressources prédéfinies à accès aléatoire selon l'autre niveau d'amélioration de couverture différent du niveau d'amélioration de couverture du terminal de MTC, les ressources prédéfinies à accès aléatoire comprenant une ressource temps-fréquence et une ressource de préambule ; et
le module (702) d'accès, configuré pour lancer un processus d'accès aléatoire en utilisant les ressources prédéfinies à accès aléatoire acquises, ledit lancement comportant :
l'acquisition, selon l'autre niveau d'amélioration de couverture différent du niveau d'amélioration de couverture du terminal de MTC, de la puissance à laquelle le terminal de MTC envoie un préambule ; et
l'envoi du préambule acquis à une station de base sur la ressource temps-fréquence acquise, à la puissance acquise pour envoyer le préambule.

5. Terminal selon la revendication 4, le terminal comportant en outre :
un premier module (705) de réception, configuré pour recevoir un message RAR de réponse en provenance de la station de base ; et
un module (706) d'envoi, configuré pour envoyer un message 3 de processus d'accès aléatoire à la station de base selon le message RAR, le message 3 de processus d'accès aléatoire transportant des informations de niveau d'amélioration de couverture du terminal de MTC.

6. Terminal selon la revendication 4, le terminal comportant en outre :
un second module (707) de réception, configuré pour recevoir des informations de configuration en provenance de la station de base, les informations de configuration transportant des identifiants des ressources prédéfinies à accès aléatoire.

7. Support de stockage lisible par ordinateur conservant un programme qui, lorsqu'il est exécuté par un ordinateur, amène l'ordinateur à réaliser le procédé selon l'une quelconque des revendications 1 à 3.
